(19) Europäisches Patentamt
European Patent Office
Office européen des brevets

(11) EP 2 966 096 B1

(12) **EUROPEAN PATENT SPECIFICATION**

(45) Date of publication and mention of the grant of the patent:
**26.04.2017 Bulletin 2017/17**

(21) Application number: **14759784.3**

(22) Date of filing: **04.03.2014**

(51) Int Cl.:
***C08F 4/6592*** *(2006.01)* ***C08F 10/00*** *(2006.01)*

(86) International application number:
**PCT/JP2014/055473**

(87) International publication number:
**WO 2014/136778 (12.09.2014 Gazette 2014/37)**

(54) **METHOD FOR PRODUCING ETHYLENE/ -OLEFIN COPOLYMER**

VERFAHREN ZUR HERSTELLUNG VON ETHYLEN-/OLEFINCOPOLYMEREN

PROCÉDÉ DE PRODUCTION D'UN COPOLYMÈRE D'ÉTHYLÈNE/ -OLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2013 JP 2013042507**

(43) Date of publication of application:
**13.01.2016 Bulletin 2016/02**

(73) Proprietor: **Japan Polyethylene Corporation**
**Tokyo 100-8251 (JP)**

(72) Inventors:
- **ITAGAKI Koji**
**Yokkaichi-shi**
**Mie 510-0848 (JP)**
- **SAKURAGI Tsutomu**
**Yokkaichi-shi**
**Mie 510-0848 (JP)**

(74) Representative: **Müller-Boré & Partner Patentanwälte PartG mbB**
**Friedenheimer Brücke 21**
**80639 München (DE)**

(56) References cited:
**JP-A- H06 100 579**
**JP-A- 2000 513 754**
**JP-A- 2005 220 231**
**JP-A- 2011 126 813**
**US-A- 5 767 208**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 966 096 B1

## Description

Technical Field

The present invention relates to a process for producing an ethylene/α-olefin copolymer. More particularly, the invention relates to a process for producing an ethylene/α-olefin copolymer having an excellent balance between the density and the molecular weight under high-temperature conditions using an olefin polymerization catalyst having excellent α-olefin copolymerization properties.

Background Art

Ethylene/α-olefin copolymers have excellent mechanical properties, and are being produced as polymers having a wide range of properties, ranging from rigid ones to flexible ones. The copolymers are in wide use in applications ranging from industrial applications to daily materials, as films and sheets, fibers and nonwoven fabrics, various vessels and molded articles, modifiers, etc.

It is generally known that ethylene polymers obtained by copolymerizing α-olefins such as 1-butene and 1-hexene as comonomers are excellent in terms of performances such as flexibility, low-temperature impact property, environmental stress cracking resistance, and transparency as compared with ethylene homopolymers. For further improving these performances of such a copolymer, it is necessary to heighten the comonomer content in the copolymer while maintaining the high molecular weight. It is also known that by using complex catalysts represented by metallocene catalysts, comonomers are introduced into the copolymer so as to be evenly distributed therein, thereby further improving the performances.

There is hence a desire for a complex catalyst which has excellent α-olefin copolymerization properties and with which high-molecular-weight olefin copolymers can be produced at temperatures in the range of 50-300°C, which in industrial processes enables efficient production of an ethylene/α-olefin copolymer having those performances, and with which a copolymer having a high α-olefin content can be produced even at a low α-olefin concentration used from the standpoint of process burden. In particular, higher polymerization temperatures are preferred from the standpoint of production efficiency. However, it has been reported that olefin copolymerization conducted using complex catalysts represented by metallocene-based catalysts have a drawback that the molecular weight of the polymer to be obtained generally decreases as the polymerization temperature rises or as the comonomer content in the copolymer to be obtained increases (see, for example, non-patent document 1).

There is hence a desire for a process for ethylene/α-olefin copolymer production using a metallocene-based catalyst which shows excellent copolymerization properties in the temperature range of 100-300°C, which in industrial processes enables efficient production of an ethylene-based polymer having those performances, and with which it is possible to produce an olefin copolymer having a high molecular weight and a low density.

A bridged bisindenyl complex having a phenyl group at the 4-position of the indenyl rings is known as a metallocene compound which has excellent α-olefin copolymerization properties and with which olefin polymers having a high molecular weight can be produced, and it has been reported that introduction of a methyl substituent at the 2-position of the indenyl rings is effective in improving the molecular weight (see non-patent documents 2 and 3).

For example, it has been reported in non-patent document 2 that in cases when ethylene homopolymerization is conducted at a polymerization temperature of 70°C, the complex having a hydrogen atom at the 2-position gives polymers having a lower molecular weight than the complex having a methyl group at the 2-position. It has been reported in non-patent document 3 that in cases when ethylene is copolymerized with propylene at a polymerization temperature of 50°C, that complex gives polymers having a lower molecular weight than the complex having a methyl group at the 2-position. Meanwhile, patent document 1 states that for attaining both molecular weight and copolymerization properties in high-temperature ethylene copolymerization, a structure is necessary in which the indenyl rings have two or more substituents thereon, in particular, a methyl group at the 2-position and a phenyl group at the 4-position.

Because of these, investigations for seeking for a 2-position substituent for the bridged bisindenyl complex having a phenyl group at the 4-position are being continued in order to produce a polymer having a higher molecular weight (see non-patent document 4 and patent documents 2 to 8).

It has been reported in non-patent document 4 that a complex having an isopropyl group is capable of producing polyethylene having a higher molecular weight in ethylene polymerization conducted under high-pressure conditions than the complex in which the 2-position substituent is a methyl group. It has been reported in patent documents 2 and 3 that complexes each having a β-position-branched alkyl substituent at the 2-position are capable of producing high-molecular-weight olefin polymers and olefin copolymers, and it has been reported in patent document 4 that a complex having a heteroaromatic substituent at the 2-position is capable of producing the (co)polymers. Furthermore, it has been reported in patent documents 5 to 8 that complexes each having different 2-position substituents on the two bisindenyl rings are capable of producing the (co)polymers.

However, the structure of such metallocene compounds has been becoming complicated as the 2-position substituents have been getting complicated. In cases when these complexes are produced through organic synthesis on a large scale which is necessary for industrial production, there has been a problem in that the cost of complex production is heightened due to factors such as the complicated synthesis routes and the necessity of multistage synthesis routes. There is hence a need for a process for producing, under high-temperature conditions, an ethylene/α-olefin copolymer having an excellent balance between the density and the molecular weight using an olefin polymerization catalyst that employs a metallocene compound having a simpler structure and that has excellent copolymerization properties.

Under these circumstances, there has been a desire for a process for producing an ethylene/α-olefin copolymer having an excellent balance between the density and the molecular weight using a metallocene catalyst that can be easily synthesized and that shows excellent copolymerization properties at industrially advantageous polymerization temperatures and under industrially advantageous polymerization conditions.

Prior Art Documents

Patent Documents

Patent Document 1: Japanese Patent No. 4553985
Patent Document 2: JP-T-2011-500800 (the term "JP-T" as used herein means a published Japanese translation of a PCT patent application)
Patent Document 3: JP-T-2012-513463
Patent Document 4: JP-A-2002-194016
Patent Document 5: Japanese Patent No. 4901043
Patent Document 6: Japanese Patent No. 4416507
Patent Document 7: Japanese Patent No. 4288658
Patent Document 8: JP-A-2004-352707

Non-Patent Documents

Non-Patent Document 1: Macromol. Chem. Phys., Vol.197, pp.3091-3097, 1996
Non-Patent Document 2: Organometallics, Viol.13, pp.954-963, 1994
Non-Patent Document 3: Macromol. Chem. Phys., Vol.206, pp.1675-1683, 2005
Non-Patent Document 4: Macromol. Chem. Phys., Vol.206, pp.1043-1056, 2005

Summary of the Invention

Problem that the Invention is to Solve

The problem that the invention is to solve is, in view of the problems of background techniques, to provide a process for producing an ethylene/α-olefin copolymer having an excellent balance between the density and the molecular weight using an olefin polymerization catalyst which shows excellent α-olefin copolymerization properties at industrially advantageous polymerization temperatures of 100-300°C.

Means for Solving the Problem

The present inventors considered from many sides and made experimental searches in order to discover a process for producing an ethylene/α-olefin copolymer having an excellent balance between the density and the molecular weight using an olefin polymerization catalyst which shows excellent α-olefin copolymerization properties at industrially advantageous polymerization temperatures of 100-300°C, and to thereby overcome the problem described above. As a result, the inventors found, in the course of the searches, that in cases when ethylene and an α-olefin are copolymerized at a polymerization temperature higher than a specific temperature using an olefin polymerization catalyst including a metallocene compound having a specific structure, it is possible to produce an ethylene/α-olefin copolymer having an excellent balance between the density and the molecular weight while enabling the catalyst to exhibit excellent copolymerization properties. The invention has been thus completed.

Namely, the inventors have discovered that the problem can be solved by the following technical means, that is, by copolymerizing ethylene and an α-olefin at a polymerization temperature not lower than a specific temperature using a catalyst including a metallocene compound having specific substituents at specific positions, i.e., a metallocene compound which has a bridged bisindenyl framework made up of two indenyl rings linked to each other by one silicon atom having a substituent and in which each indenyl ring has a hydrogen atom as a substituent at the 2-position.

Thus, in the process for ethylene/α-olefin copolymer production, which constitutes the basic configuration of the invention, a specific metallocene compound is used and this metallocene compound is characterized by the chemical, steric, and electronic environmental structure of the ligands in the catalyst structure of the metallocene catalyst. Due to this, the catalyst shows excellent copolymerization properties under industrially advantageous conditions and, hence, an olefin-based copolymer having a sufficiently low density and a sufficiently high molecular weight can be produced.

Namely, the invention has the following configurations (1) to (7).

(1) A process for producing an olefin polymer, the process comprising copolymerizing ethylene with a α-olefin at a polymerization temperature of 110°C or higher using a catalyst for olefin polymerization which comprises components (A) and (B) and optionally comprises a component (C):

Component (A): a metallocene compound represented by the following general formula [I],
Component (B): a compound which reacts with component (A) to form an ion pair, or an ion-exchanging layered silicate, and
Component (C): an organoaluminum compound,

[Chem. 1]

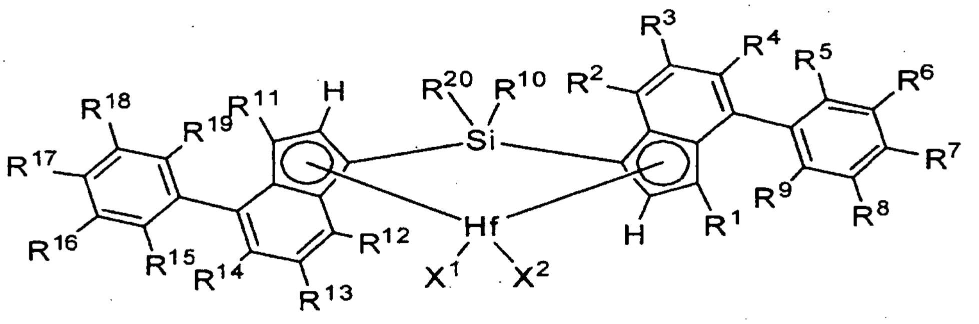

· · · [ I ]

[In formula [I], $R^1$ to $R^9$ and $R^{11}$ to $R^{19}$ are the same or different and each represents a hydrogen atom, a halogen atom, an alkyl group having 1-10 carbon atoms, a halogenoalkyl group having 1-10 carbon atoms, an aryl group having 6-20 carbon atoms, an alkoxy group having 1-10 carbon atoms, a silyl group having a hydrocarbon group having 1-6 carbon atoms, an alkyl group having 1-20 carbon atoms and substituted with a silyl group having a hydrocarbon group having 1-6 carbon atoms, an $-NR^{21}_2$ group, an $-SR^{21}$ group, an $-OSiR^{21}_3$ group, or a $-PR^{21}_2$ group (wherein the $R^{21}$'s are the same or different and each represents a halogen atom, an alkyl group having 1-10 carbon atoms, or an aryl group having 6-20 carbon atoms), and neighboring groups of $R^1$ to $R^9$ and $R^{11}$ to $R^{19}$ may form one or more aromatic rings or aliphatic rings along with the atom which links the neighboring groups, or $R^4$ and either $R^5$ or $R^9$ may form one aromatic ring or aliphatic ring along with the atom which links these groups and $R^{14}$ and either $R^{15}$ or $R^{19}$ may form one aromatic ring or aliphatic ring along with the atom which links these groups;

$R^{10}$ and $R^{20}$ are the same or different and each represents a hydrogen atom, a halogen atom, an alkyl group having 1-10 carbon atoms, a fluoroalkyl group having 1-10 carbon atoms, an alkoxy group having 1-10 carbon atoms, an aryl group having 6-20 carbon atoms, an fluoroaryl group having 6-10 carbon atoms, an aryloxy group having 6-10 carbon atoms, an alkenyl group having 2-10 carbon atoms, an arylalkyl group having 7-40 carbon atoms, an alkylaryl group having 7-40 carbon atoms, or an arylalkenyl group having 8-40 carbon atoms, with the proviso that $R^{10}$ and $R^{20}$ are not simultaneously a hydrogen atom and that $R^{10}$ and $R^{20}$ may form one or more rings along with the atom which links these groups; and

$X^1$ and $X^2$ are the same or different and are selected from the group consisting of a hydrogen atom, an alkyl group having 1-10 carbon atoms, an alkoxy group having 1-10 carbon atoms, an aryl group having

6-20 carbon atoms, an aryloxy group having 6-10 carbon atoms, an alkenyl group having 2-10 carbon atoms, an arylalkyl group having 7-40 carbon atoms, an alkylaryl group having 7-40 carbon atoms, an arylalkenyl group having 8-40 carbon atoms, an alkyl group having 1-20 carbon atoms and substituted with a silyl group having a hydrocarbon group having 1-6 carbon atoms, a substituted amino group having 1-10 carbon atoms, an OH group, a halogen atom, and a neutral ligand capable of coordinating with lone-pair electrons, and $X^1$ and $X^2$ may form one ring along with the atom which links these groups.]

(2) The process for producing an olefin polymer according to the (1) above, wherein the polymerization temperature is 125°C or higher.
(3) The process for producing an olefin polymer according to the (1) or (2) above, wherein the polymerization temperature is 180°C or higher.
(4) The process for producing an olefin polymer according to any one of the (1) to (3) above, wherein component (B) is a boron compound.
(5) The process for producing an olefin polymer according to any one of the (1) to (4) above, wherein in general formula (I), $R^1$ to $R^4$ and $R^{11}$ to $R^{14}$ are the same or different and each represents a hydrogen atom or an alkyl group having 1-10 carbon atoms, and $R^5$ to $R^9$ and $R^{15}$ to $R^{19}$ are the same or different and each represents a hydrogen atom, an alkyl group having 1-10 carbon atoms, or an aryl group having 6-10 carbon atoms.
(6) The process for producing an olefin polymer according to any one of the (1) to (5) above, wherein a pressure at the polymerization is 2 MPa or higher.
(7) The process for producing an olefin polymer according to any one of the (1) to (6) above, wherein a pressure at the polymerization is 55 MPa or higher and 125 MPa or lower.

The present invention includes the basic invention (invention (1) above) described above, and further includes the following as additional inventions (embodiment inventions): inventions wherein the polymerization temperature has been specified ((2) and (3) above); an invention wherein the cocatalyst component has been specified ((4) above); an invention wherein the substituents at the respective positions in the metallocene compound have been specified ((5) above); and inventions wherein the polymerization pressure has been specified ((6) and (7) above).

By using the metallocene compound according to the invention as a catalyst component for polymerization to conduct copolymerization of ethylene with an $\alpha$-olefin at a polymerization temperature higher than a specific temperature, an ethylene/$\alpha$-olefin copolymer having an excellent balance between the density and the molecular weight can be produced with the olefin polymerization catalyst, which has excellent $\alpha$-olefin copolymerization properties, at a polymerization temperature of 110°C or higher, as demonstrated by comparisons between the Examples and Comparative Examples that will be given later. The metallocene compound represented by general formula [I] in the invention has a basic feature wherein the compound has a sterically and electroenvironmentally peculiar structure which is made up of two indenyl rings linked to each other by one silicon atom having a substituent and in which each indenyl ring has a hydrogen atom as a substituent at the 2-position and has at the 4-position a phenyl framework that may have substituents. It can be presumed that this feature brings about the peculiarity of the invention.

The reasons why the process for producing an ethylene/$\alpha$-olefin copolymer of the invention produces the effects of the invention are considered below in more detail. The structure in which a hydrogen atom has been disposed at the 2-position of each indenyl ring is not effective in sterically inhibiting the polymer elimination reaction, which is causative of a decrease in the molecular weight of polymer chains that are growing, at polymerization temperatures lower than 110°C. It is, however, thought that at higher polymerization temperatures at which the growing polymer chains show active molecular movements, the structure in which a hydrogen atom, which has the smallest atomic radius, has been disposed at the 2-position has brought about minimum steric repulsion between the polymer chain and the 2-position substituent and, as a result, the polymer elimination reaction has been inhibited therewith as compared with compounds of the structure which has a substituent other than hydrogen at the 2-position.

As will be demonstrated by comparisons between Examples and Comparative Examples, the structures including an indenyl ring having a methyl group or isopropyl group disposed at the 2-position are not a configuration capable of sufficiently inhibiting the polymer elimination reaction at high polymerization temperatures.

In contrast to these results, the structure in which each indenyl ring has a hydrogen atom at the 2-position, which was discovered in relation to the present invention, is thought to provide a moderate steric environment capable of inhibiting the polymer elimination reaction at high polymerization temperatures.

Incidentally, the present invention is considerably different from the prior-art invention according to each of the documents shown above as patent documents and non-patent documents, in the constituent elements (characterizing features) and in the effects of the invention. In particular, the result of the invention wherein a compound including an indenyl ring having a hydrogen atom as a 2-position substituent gives, at polymerization temperatures not lower than a specific temperature, an olefin polymer having a higher molecular weight than compounds having a substituent at the 2-position, as different from the conventional knowledge, is not indicated at all in those prior-art documents.

How the present invention has been achieved and the basic configuration and feature of the invention were summarized above. Here, the overall configuration of the present invention is summed up in a bird's eye manner. The present invention is configured of a group of unit inventions (1) to (7) shown above.

The present invention includes, as the basic invention (1), ethylene/α-olefin copolymerization which is practiced at a specific polymerization temperature or higher using an olefin polymerization catalyst employing a metallocene compound represented by general formula [I], and invention (2) and the succeeding inventions are for adding incidental requisites to the basic invention or for showing embodiments thereof; additional requisites for overcoming the problem to be solved by the invention are specified therein. All these unit inventions are inclusively referred to as invention group.

Effects of the Invention

By using the production process of the invention, in which an olefin polymerization catalyst that shows excellent α-olefin copolymerization properties at industrially advantageous polymerization temperatures is used, a copolymer having a low density is yielded even with a low α-olefin concentration, as compared with the production processes in which conventional metallocene compounds are used. This process for producing an ethylene/α-olefin copolymer, which has an excellent balance between the density and the molecular weight, is exceedingly useful from an industrial standpoint.

Brief Description of the Drawing

[Fig. 1] Fig. 1 is a chart which shows a relationship between molecular weight (Mn) and density in Examples 1 to 3 and Comparative Examples 1 and 2.

Modes for Carrying Out the Invention

Detailed explanations are given below on each of the process for ethylene/α-olefin copolymer production of the invention and the metallocene compound and catalyst for olefin polymerization which are used in the polymerization.

1. Metallocene Compound

The metallocene compound in the invention is a metallocene compound which is represented by general formula [I] and has specific substituents.

[Chem. 2]

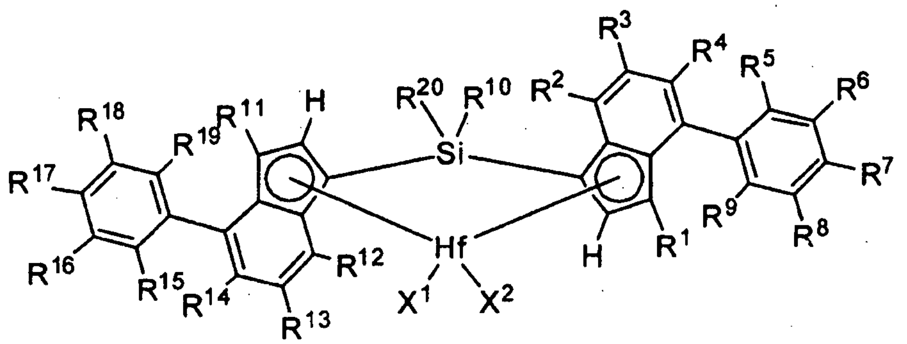

• • • [ I ]

[In formula [I], $R^1$ to $R^9$ and $R^{11}$ to $R^{19}$ are the same or different and each are a hydrogen atom, a halogen atom, an alkyl group having 1-10 carbon atoms, a halogenoalkyl group having 1-10 carbon atoms, an aryl group having 6-20 carbon atoms, an alkoxy group having 1-10 carbon atoms, a silyl group having a hydrocarbon group having 1-6 carbon atoms, an alkyl group having 1-20 carbon atoms and substituted with a silyl group having one or more hydrocarbon groups having 1-6 carbon atoms, an $-NR^{21}_2$ group, an $-SR^{21}$ group, an $-OSiR^{21}_3$ group, or a $-PR^{21}_2$ group (wherein the $R^{21}$ moieties are the same or different and each are a halogen atom, an alkyl group having 1-10 carbon atoms, or an aryl group having 6-20 carbon atoms), and any neighboring groups among $R^1$ to $R^9$ and $R^{11}$ to $R^{19}$ may have formed one or more aromatic rings or aliphatic rings along with the atom which link the neighboring groups, or $R^4$ and either $R^5$ or $R^9$ may have formed one aromatic ring or aliphatic ring along with the atom which link these groups and $R^{14}$ and either $R^{15}$ or $R^{19}$ may have formed one aromatic ring or aliphatic ring along with the atom which link these groups;

$R^{10}$ and $R^{20}$ are the same or different and each are a hydrogen atom, a halogen atom, an alkyl group having 1-10 carbon atoms

atoms, a fluoroalkyl group having 1-10 carbon atoms, an alkoxy group having 1-10 carbon atoms, an aryl group having 6-20 carbon atoms, an fluoroaryl group having 6-10 carbon atoms, an aryloxy group having 6-10 carbon atoms, an alkenyl group having 2-10 carbon atoms, an arylalkyl group having 7-40 carbon atoms, an alkylaryl group having 7-40 carbon atoms, or an arylalkenyl group having 8-40 carbon atoms, with the proviso that $R^{10}$ and $R^{20}$ are not simultaneously hydrogen atoms and that $R^{10}$ and $R^{20}$ may form one or more rings in cooperation with the atom which links these groups; and

$X^1$ and $X^2$ are the same or different and are selected from the group consisting of a hydrogen atom, an alkyl group having 1-10 carbon atoms, an alkoxy group having 1-10 carbon atoms, an aryl group having 6-20 carbon atoms, an aryloxy group having 6-10 carbon atoms, an alkenyl group having 2-10 carbon atoms, an arylalkyl group having 7-40 carbon atoms, an alkylaryl group having 7-40 carbon atoms, an arylalkenyl group having 8-40 carbon atoms, an alkyl group having 1-20 carbon atoms and substituted with a silyl group having one or more hydrocarbon groups having 1-6 carbon atoms, a substituted amino group having 1-10 carbon atoms, an OH group, a halogen atom, and a neutral ligand capable of coordinating with lone-pair electrons, and $X^1$ and $X^2$ may have formed one ring in cooperation with the atom which links these groups.]

$X^1$ and $X^2$ are selected from the group consisting of a hydrogen atom, an alkyl group having 1-10 carbon atoms, an alkoxy group having 1-10 carbon atoms, an aryl group having 6-20 carbon atoms, an aryloxy group having 6-10 carbon atoms, an alkenyl group having 2-10 carbon atoms, an arylalkyl group having 7-40 carbon atoms, an alkylaryl group having 7-40 carbon atoms, an arylalkenyl group having 8-40 carbon atoms, an alkyl group having 1-20 carbon atoms and substituted with a silyl group having one or more hydrocarbon groups having 1-6 carbon atoms, a substituted amino group having 1-10 carbon atoms, an OH group, a halogen atom, and a neutral ligand capable of coordinating with lone-pair electrons. $X^1$ and $X^2$ may be the same or different, and may have formed one ring in cooperation with the atom which links these groups. Examples thereof include a chlorine atom, bromine atom, iodine atom, fluorine atom, methyl, ethyl, propyl, n-butyl, isobutyl, phenyl, benzyl, dimethylamino, diethylamino, or trimethylsilylmethyl.

In the case where $X^1$ and $X^2$ each are a neutral ligand capable of coordinating with lone-pair electrons and have formed one ring in cooperation with the atom which links these groups, examples of the group of atoms include 1,3-butadiene, 1,4-diphenyl-1,3-butadiene, 3-methyl-1,3-pentadiene, 1,4-dibenzyl-1,3-butadiene, 2,4-hexadiene, 1,3-pentadiene, 1,4-ditolyl-1,3-butadiene, and 1,4-bis(trimethylsilyl)-1,3-butadiene.

Specifically, especially preferred are a chlorine atom, methyl, isobutyl, phenyl, benzyl, and trimethylsilylmethyl. Most preferred are a chlorine atom, methyl, isobutyl, benzyl, and trimethylsilylmethyl.

Examples of the alkyl group having 1-10 carbon atoms in general formula [I] include methyl, ethyl, n-propyl, isopropyl, n-butyl, isobutyl, s-butyl, t-butyl, n-pentyl, n-hexyl, cyclopropyl, cyclopentyl, cyclohexyl, n-heptyl, n-octyl, and n-decyl.

Examples of the halogen atom(s) of the halogenoalkyl group having 1-10 carbon atoms include a fluorine atom, chlorine atom, bromine atom, and iodine atom. The halogenoalkyl group having 1-10 carbon atoms is an alkyl group which has 1-10 carbon atoms and in which one or more hydrogen atoms on the framework have been replaced by a halogen.

Examples thereof include fluoromethyl, difluoromethyl, trifluoromethyl, chloromethyl, dichloromethyl, trichloromethyl, bromomethyl, dibromomethyl, tribromomethyl, iodomethyl, 2,2,2-trifluoroethyl, 2,2,1,1-tetrafluoroethyl, pentafluoroethyl, pentachloroethyl, pentafluoropropyl, nonafluorobutyl, 5-chloropentyl, 5,5,5-trichloropentyl, 5-fluoropentyl, 5,5,5-trifluoropentyl, 6-chlorohexyl, 6,6,6-trichlorohexyl, 6-fluorohexyl, and 6,6,6-trifluorohexyl.

Examples of the aryl group having 6-20 carbon atoms include phenyl, 1-naphthyl, 2-naphthyl, acenaphthyl, phenanthryl, and anthryl.

The fluoroalkyl group having 1-10 carbon atoms is an alkyl group which has 1-10 carbon atoms and in which one or more hydrogen atoms on the framework have been replaced by one or more fluorine atoms.

Examples thereof include fluoromethyl, difluoromethyl, trifluoromethyl, 2,2,2-trifluoroethyl, 2,2,1,1-tetrafluoroethyl, pentafluoroethyl, pentafluoropropyl, 5=fluoropentyl, 5,5,5-trifluoropentyl, 6-fluorohexyl, and 6,6,6-trifluorohexyl.

Examples of the alkoxy group having 1-10 carbon atoms include methoxy, ethoxy, n-propoxy, isopropoxy, n-butoxy, isobutoxy, s-butoxy, t-butoxy, n-pentoxy, n-hexoxy, cyclopropoxy, cyclopentoxy, cyclohexoxy, n-octoxy, and n-detoxy.

The fluoroaryl group having 6-10 carbon atoms is an aryl group which has 6-10 carbon atoms and in which one or more hydrogen atoms on the framework have been replaced by one or more fluorine atoms. Examples thereof include pentafluorophenyl, 2-fluorophenyl, 3-fluorophenyl, 4-fluorophenyl, di(trifluoromethyl)phenyl, pentafluoroethylphenyl, nonafluoro-t-butylphenyl, 1-perfluoronaphthyl, and 2-perfluoronaphthyl.

The aryloxy group having 6-10 carbon atoms may have been substituted with one or more hydrocarbon groups having 1-4 carbon atoms. Examples thereof include phenoxy, trimethylphenoxy, dimethylphenoxy, ethylphenoxy, t-butylphenoxy, 1-naphthoxy, and 2-naphthoxy.

Examples of the alkenyl group having 2-10 carbon atoms include vinyl, 1-propenyl, 2-propenyl, 3-butenyl, 5-hexenyl, and 7-octenyl.

Examples of the arylalkyl group having 7-40 carbon atoms include benzyl, phenylethyl, (methylphenyl)methyl, and (tert-butylphenyl)methyl.

Examples of the alkylaryl group having 7-40 carbon atoms include tolyl, dimethylphenyl, ethylphenyl, trimethylphenyl, and t-butylphenyl.

Examples of the arylalkenyl group having 8-40 carbon atoms include vinylphenyl and (2-propenyl)phenyl.

Examples of the alkyl group having 1-20 carbon atoms and substituted with a silyl group having one or more hydrocarbon groups having 1-6 carbon atoms include trimethylsilylmethyl, triethylsilylmethyl, and triphenylsilylmethyl.

Examples of the substituted amino group having 1-10 carbon atoms include dimethylamino, diethylamino, and diisopropylamino.

Examples of the silyl group having one or more hydrocarbon groups having 1-6 carbon atoms include trimethylsilyl, triethylsilyl, tert-butyl(dimethyl)silyl, and triphenylsilyl.

Preferred examples of the $R^{21}$ group are alkyl groups having 1-10 carbon atoms and aryl groups having 6-10 carbon atoms. Preferred examples of the $-NR^{21}_2$ group include dimethylamino, diethylamino, and diisopropylamino.

Examples of the $-SR^{21}$ group include methylsulfanyl, ethylsulfanyl, isopropylsulfanyl, and phenylsulfanyl.

Examples of the $-OSiR^{21}_3$ group include trimethylsiloxy, triethylsiloxy, triisopropylsiloxy, triphenylsiloxy, and tert-butyl(dimethyl)siloxy.

Examples of the $-PR^{21}_2$ group include dimethylphosphino, diethylphosphino, diisopropylphosphino, dibutylphosphino, and diphenylphosphino.

It is preferable that $R^1$, $R^2$, $R^3$, $R^4$, $R^{11}$, $R^{12}$, $R^{13}$, and $R^{14}$ should be hydrogen atoms.

$R^5$, $R^6$, $R^7$, $R^8$, $R^9$, $R^{15}$, $R^{16}$; $R^{17}$, $R^{18}$, and $R^{19}$ each preferably are a hydrogen atom, an alkyl group having 1-10 carbon atoms, a silyl group having one or more hydrocarbon groups having 1-6 carbon atoms, an alkyl group having 1-20 carbon atoms and substituted with a silyl group having one or more hydrocarbon groups having 1-6 carbon atoms, or an aryl group having 6-20 carbon atoms, and more preferably are a hydrogen atom, an alkyl group having 1-10 carbon atoms, or an aryl group having 6-10 carbon atoms.

Specific Examples of the Metallocene Compound:

Specific examples of the metallocene compound according to the invention are shown below. These are representative examples.

Dimethylsilylene-bridged Metallocene Compounds

- Dimethylsilylenebis(4-phenyl-1-indenyl)dimethylhafnium
- Dimethylsilylenebis(4-(3-methylphenyl)-1-indenyl)dimethylhafnium
- Dimethylsilylenebis(4-(3-isopropytphenyl)-1-indenyl)dimethylhafnium
- Dimethylsilylenebis(4-(3-tert-butylphenyl)-1-indenyl)dimethylhafnium
- Dimethylsitylenebis(4-(4-methylphenyl)-1-indenyl)dimethylhafnium
- Dimethylsilylenebis(4-(4-isopropylphenyl)-1-indenyl)dimethylhafnium
- Dimethylsilylenebis(4-(4-tert-butylphenyl)-1-indenyl)dimethylhafnium
- Dimethylsilylenebis(4-(4-trifluoromethylphenyl)-1-indenyl)dimethylhafnium
- Dimethy1silylenebis(4-(4-methoxypheny1)-1-indenyl)dimethylhafnium
- Dimethylsilylenebis(4-(4-isopropoxyphenyl)-1-indenyl)dimethylhafnium
- Dimethylsilylenebis(4-(4-trimethylsilylphenyl)-1-indenyl)dimethylhafnium
- Dimethylsilylenebis(4-(4-fluorophenyl)-1-indenyl)dimethylhafnium
- Dimethylsilylenebis(4-(4-chlorophenyl)-1-indenyl)dimethylhafnium
- Dimethylsilylenebis(4-(4-bromophenyl)-1-indenyl)dimethylhafnium
- Dimethylsilylenebis(4-(2-methylphenyl)-1-indenyl)dimethylhafnium
- Dimethylsilylenebis(4-(2-ethylphenyl)-1-indenyl)dimethylhafnium
- Dimethylsilylenebis(4-(3,5-dimethylphenyl)-1-indenyl)dimethylhafnium
- Dimethylsilylenebis(4-(3,5-diisopropylphenyl)-1-indenyl)dimethylhafnium
- Dimethylsilylenebis(4-(3,5-di-tert-butylphenyl)-1-indenyl)dimethylhafnium
- Dimethylsilylenebis(4-(3,5-dimethoxyphenyl)-1-indenyl)dimethylhafnium
- Dimethylsilylenebis(4-(3,5-ditrimethylsilylphenyl)-1-indenyl)dimethylhafnium
- Dimethylsilylenebis(4-(3,5-ditrifluoromethylphenyl)-1-indenyl)dimethylhafnium
- Dimethylsilylenebis(4-(2,3-dimethylphenyl)-1-indenyl)dimethylhafnium
- Dimethylsilylenebis(4-(2,5-dimethylphenyl)-1-indenyl)dimethylhafnium
- Dimethylsilylenebis(4-(2,6-dimethylphenyl)-1-indenyl)dimethylhafnium
- Dimethylsilylenebis(4-(2,3,5,6-tetramethylphenyl)-1-indenyl)dimethylhafnium
- Dimethylsilylenebis(4-(2,3,4,5,6-pentamethylphenyl)-1-indenyl)dimethylhafnium

- Dimethylsilylenebis(4-(4-tert-butyl-2-methylphenyl)-1-indenyl)dimethylhafnium
- Dimethylsilylenebis(4-biphenylyl-1-indenyl)dimethylhafnium
- Dimethylsilylenebis(4-(2,6-dimethylbiphenylyl)-1-indenyl)dimethylhafnium
- Dimethylsilylenebis(4-(2',6'-dimethy1biphenylyl)-1-indenyl)dimethylhafnium
- Dimethylsilylenebis(4-(1-naphthyl)-1-indenyl)dimethylhafnium
- Dimethylsilylenebis(4-(2-naphthyl)-1-indenyl)dimethylhafnium
- Dimethylsilylenebis(4-phenanthryl-1-indenyl)dimethylhafnium

Diethylsilylene-bridged Metallocene Compounds

- Diethylsilylenebis(4-phenyl-1-indenyl)dimethylhafnium
- Diethylsilylenebis(4-(3-methylphenyl)-1-indenyl)dimethylhafnium
- Diethylsilylenebis(4-(3-isopropylphenyl)-1-indenyl)dimethylhafnium
- Diethylsilylenebis(4-(3-tert-butylphenyl)-1-indenyl)dimethylhafnium
- Diethylsilylenebis(4-(4-methylphenyl)-1-indenyl)dimethylhafnium
- Diethylsilylenebis(4-(4-isopropylphenyl)-1-indenyl)dimethylhafnium
- Diethylsilylenebis(4-(4-tert-butylphenyl)-1-indenyl)dimethylhafnium
- Diethylsilylenebis(4-(4-trifluoromethylphenyl)-1-indenyl)dimethylhafnium
- Diethylsilylenebis(4-(4-methoxyphenyl)-1-indenyl)dimethylhafnium
- Diethylsilylenebis(4-(4-isopropoxyphenyl)-1-indenyl)dimethylhafnium
- Diethylsilylenebis(4-(4-trimethylsilylphenyl)-1-indenyl)dimethylhafnium
- Diethylsilylenebis(4-(4-fluorophenyl)-1-indenyl)dimethylhafnium
- Diethylsilylenebis(4-(4-chlorophenyl)-1-indenyl)dimethylhafnium
- Diethylsilylenebis(4-(4-bromophenyl)-1-indenyl)dimethylhafnium
- Diethylsilylenebis(4-(2-methylphenyl)-1-indenyl)dimethylhafnium
- Diethylsilylenebis(4-(2-ethylphenyl)-1-indenyl)dimethylhafnium
- Diethylsilylenebis(4-(3,5-dimethylphenyl)-1-indenyl)dimethylhafnium
- Diethylsilylenebis(4-(3,5-diisopropylphenyl)-1-indenyl)dimethylhafnium
- Diethylsilylenebis(4-(3,5-di-tert-butylphenyl)-1-indenyl)dimethylhafnium
- Diethylsilylenebis(4-(3,5-dimethoxyphenyl)-1-indenyl)dimethylhafnium
- Diethylsilylenebis(4-(3,5-ditrimethylsilylphenyl)-1-indenyl)dimethylhafnium
- Diethylsilylenebis(4-(3,5-ditrifluoromethylphenyl)-1-indenyl)dimethylhafnium
- Diethylsilylenebis(4-(2,3-dimethylphenyl)-1-indenyl)dimethylhafnium
- Diethylsilylenebis(4-(2,5-dimethylphenyl)-1-indenyl)dimethylhafnium
- Diethylsilylenebis(4-(2,6-dimethylphenyl)-1-indenyl)dimethylhafnium
- Diethylsilylenebis(4-(2,3,5,6-tetramethylphenyl)-1-indenyl)dimethylhafnium
- Diethylsilylenebis(4-(2,3,4,5,6-pentamethylphenyl)-1-indenyl)dimethylhafnium
- Diethylsilylenebis(4-(4-tert-butyl-2-methylphenyl)-1-indenyl)dimethylhafnium
- Diethytsilylenebis(4-biphenylyl-1-indenyl)dimethylhafnium
- Diethylsilylenebis(4-(2,6-dimethylbiphenylyl)-1-indenyl)dimethylhafnium
- Diethylsilylenebis(4-(2',6'-dimethylbiphenylyl)-1-indenyl)dimethylhafnium
- Diethylsilylenebis(4-(1-naphthyl)-1-indenyl)dimethylhafnium
- Diethylsilylenebis(4-(2-naphthyl)-1-indenyl)dimethylhafnium
- Diethylsilylenebis(4-phenanthryl-1-indenyl)dimethylhafnium

Diisopropylsilylene-bridged Metallocene Compounds

- Diisopropyl silylenebis(4-phenyl-1-indenyl)dimethylhafnium
- Diisopropylsilylenebis(4-(3-methylphenyl)-1-indenyl)dimethylhafnium
- Diisopropylsilylenebis(4-(3-isopropylphenyl)-1-indenyl)dimethylhafnium
- Diisopropylsilylenebis(4-(3-tert-butylphenyl)-1-indenyl)dimethylhafnium
- Diisopropylsilylenebis(4-(4-methylphenyl)-1-indenyl)dimethylhafnium
- Diisopropylsilylenebis(4-(4-isopropylphenyl)-1-indenyl)dimethylhafnium
- Diisopropylsilylenebis(4-(4-tert-butylphenyl)-1-indenyl)dimethylhafnium
- Diisopropylsilylenebis(4-(4-trifluoromethylphenyl)-1-indenyl)dimethylhafnium
- Diisopropylsilylenebis(4-(4-methoxyphenyl)-1-indenyl)dimethylhafnium
- Diisopropylsilylenebis(4-(4-isopropoxyphenyl)-1-indenyl)dimethylhafnium
- Diisopropylsilylenebis(4-(4-trimethylsilylphenyl)-1-indenyl)dimethylhafnium

- Diisopropylsilylenebis(4-(4-fluorophenyl)-1-indenyl)dimethylhafnium
- Diisopropylsilylenebis(4-(4-chlorophenyl)-1-indenyl)dimethylhafnium
- Diisopropylsilylenebis(4-(4-bromophenyl)-1-indenyl)dimethylhafnium
- Diisopropylsilylenebis(4-(2-methylphenyl)-1-indenyl)dimethylhafnium
- Diisopropylsilylenebis(4-(2-ethylphenyl)-1-indenyl)dimethylhafnium
- Diisopropylsilylenebis(4-(3,5-dimethylphenyl)-1-indenyl)dimethylhafnium
- Diisopropylsilylenebis(4-(3,5-diisopropylphenyl)-1-indenyl)dimethylhafnium
- Diisopropylsilylenebis(4-(3,5-di-tert-butylphenyl)-1-indenyl)dimethylhafnium
- Diisopropylsilylenebis(4-(3,5-dimethoxyphenyl)-1-indenyl)dimethylhafnium
- Diisopropylsilylenebis(4-(3,5-ditrimethylsilylphenyl)-1-indenyl)dimethylhafnium
- Diisopropylsilylenebis(4-(3,5-ditrifluoromethylphenyl)-1-indenyl)dimethylhafnium
- Diisopropylsilylenebis(4-(2,3-dimethylphenyl)-1-indenyl)dimethylhafnium
- Diisopropylsilylenebis(4-(2,5-dimethylphenyl)-1-indenyl)dimethylhafnium
- Diisopropylsilylenebis(4-(2,6-dimethylphenyl)-1-indenyl)dimethylhafnium
- Diisopropylsilylenebis(4-(2,3,5,6-tetramethylphenyl)-1-indenyl)dimethylhafnium
- Diisopropylsilylenebis(4-(2,3,4,5,6-pentamethylphenyl)-1-indenyl)dimethylhafnium
- Diisopropylsilylenebis(4-(4-tert-butyl-2-methylphenyl)-1-indenyl)dimethylhafnium
- Diisopropylsilylenebis(4-biphenylyl-1-indenyl)dimethylhafnium
- Diisopropylsilylenebis(4-(2,6-dimethylbiphenylyl)-1-indenyl)dimethylhafnium
- Diisopropylsilylenebis(4-(2',6'-dimethylbiphenylyl)-1-indenyl)dimethylhafnium
- Diisopropylsilylenebis(4-(1-naphthyl)-1-indenyl)dimethylhafnium
- Diisopropylsilylenebis(4-(2-naphthyl)-1-indenyl)dimethylhafnium
- Diisopropylsilylenebis(4-phenanthryl-1-indenyl)dimethylhafnium

Di-tert-butylsilylene-bridged Metallocene Compounds

- Di-tert-butylsilylenebis(4-phenyl-1-indenyl)dimethylhafnium
- Di-tert-butylsilylenebis(4-(3-methylphenyl)-1-indenyl)dimethylhafnium
- Di-tert-butylsilylenebis(4-(3-isopropylphenyl)-1-indenyl)dimethylhafnium
- Di-tert-butylsilylenebis(4-(3-tert-butylphenyl)-1-indenyl)dimethylhafnium
- Di-tert-butylsilylenebis(4-(4-methylphenyl)-1-indenyl)dimethylhafnium
- Di-tert-butylsilylenebis(4-(4-isopropylphenyl)-1-indenyl)dimethylhafnium
- Di-tert-butylsilylenebis(4-(4-tert-butylphenyl)-1-indenyl)dimethylhafnium
- Di-tert-butylsilylenebis(4-(4-trimethyisilylphenyl)-1-indenyl)dimethylhafnium
- Di-tert-butylsilylenebis(4-(2-methylphenyl)-1-indenyl)dimethylhafnium
- Di-tert-butylsilylenebis(4-(2-ethylphenyl)-1-indenyl)dimethylhafnium
- Di-tert-butylsilylenebis(4-(3,5-dimethylphenyl)-1-indenyl)dimethylhafnium
- Di-tert-butylsilylenebis(4-(3,5-di-tert-butylphenyl)-1-indenyl)dimethylhafnium
- Di-tert-butylsilylenebis(4-(3,5-ditrimethylsilylphenyl)-1-indenyl)dimethylhafnium
- Di-tert-butylsilylenebis(4-(2,3-dimethylphenyl)-1-indenyl)dimethylhafnium
- Di-tert-butylsilylenebis(4-(2,5-dimethylphenyl)-1-indenyl)dimethylhafnium
- Di-tert-butylsilylenebis(4-(2,6-dimethylphenyl)-1-indenyl)dimethylhafnium
- Di-tert-butylsilylenebis(4-(4-tert-butyl-2-methylphenyl)-1-indenyl)dimethylhafnium
- Di-tert-butylsilylenebis(4-biphenylyl-1-indenyl)dimethylhafnium

Di-n-pentylsilylene-bridged Metallocene Compounds

- Di-n-pentylsilylenebis(4-phenyl-1-indenyl)dimethylhafnium
- Di-n-pentylsilylenebis(4-(3-methylphenyl)-1-indenyl)dimethylhafnium
- Di-n-pentylsilylenebis(4-(3-methylphenyl)-1-indenyl)dimethylhafnium
- Di-n-pentylsilylenebis(4-(3-isopropylphenyl)-1-indenyl)dimethylhafnium
- Di-n-pentylsilylenebis(4-(3-tert-butylphenyl)-1-indenyl)dimethylhafnium
- Di-n-pentylsilylenebis(4-(4-methylphenyl)-1-indenyl)dimethylhafnium
- Di-n-pentylsiylenebis(4-(4-isopropylphenyl)-1-indenyl)dimethylhafnium
- Di-n-pentylsilylenebis(4-(4-tert-butylphenyl)-1-indenyl)dimethylhafnium
- Di-pentylsilylenebis(4-(4-trimethylsilylphenyl)-1-indenyl)dimethylhafnium
- Di-n-pentylsilylenebis(4-(2-methylphenyl)-1-indenyl)dimethylhafnium
- Di-n-pentylsilylenebis(4-(2-ethylphenym)-1-indenyl)dimethylhafnium

- Di-n-pentylsilylenebis(4-(3,5-dimethylphenyl)-1-indenyl)dimethylhafnium
- Di-n-pentylsilylenebis(4-(3,5-di-tert-butylphenyl)-1-indenyl)dimethylhafnium
- Di-n-pentylsilylenebis(4-(3,5-ditrimethylsilylphenyl)-1-indenyl)dimethylhafnium
- Di-n-pentylsilylenebis(4-(2,3-dimethylphenyl)-1-indenyl)dimethylhafnium
- Di-n-pentylsilylenebis(4-(2,5-dimethylphenyl)-1-indenyl)dimethylhafnium
- Di-n-pentylsilylenebis(4-(2,6-dimethylphenyl)-1-indenyl)dimethylhafnium
- Di-n-pentylsilylenebis(4-(4-tert-butyl-2-methylphenyl)-1-indenyl)dimethylhafnium
- Di-n-pentylsilylenebis(4-biphenylyl-1-indenyl)dimethylhafnium

Di-n-hexylsilylene-bridged Metallocene Compounds

- Di-n-hexylsilylenebis(4-phenyl-1-indenyl)dimethylhafnium
- Di-n-hexylsilylenebis(4-(3-methylphenyl)-1-indenyl)dimethylhafnium
- Di-n-hexylsilylenebis(4-(3-isopropylphenyl)-1-indenyl)dimethylhafnium
- Di-n-hexylsilylenebis(4-(3-tert-butylphenyl)-1-indenyl)dimethylhafnium
- Di-n-hexylsilylenebis(4-(4-methylphenyl)-1-indenyl)dimethylhafnium
- Di-n-hexylsilylenebis(4-(4-isopropylphenyl)-1-indenyl)dimethylhafnium
- Di-n-hexylsilylenebis(4-(4-tert-butylphenyl)-1-indenyl)dimethylhafnium
- Di-n-hexylsilylenebis(4-(4-trimethylsilylphenyl)-1-indenyl)dimethylhafnium
- Di-n-hexylsilylenebis(4-(2-methylphenyl)-1-indenyl)dimethylhafnium
- Di-n-hexylsilylenebis(4-(2-ethylphenyl)-1-indenyl)dimethylhafnium
- Di-n-hexylsilylenebis(4-(3,5-dimethylphenyl)-1-indenyl)dimethylhafnium
- Di-n-hexylsilylenebis(4-(3,5-di-tert-butylphenyl)-1-indenyl)dimethylhafnium
- Di-n-hexylsilylenebis(4-(3,5-ditrimethylsilylphenyl)-1-indenyl)dimethyl-hafnium
- Di-n-hexylsilylenebis(4-(2,3-dimethylphenyl)-1-indenyl)dimethylhafnium
- Di-n-hexylsilylenebis(4-(2,5-dimethylphenyl)-1-indenyl)dimethylhafnium
- Di-n-hexylsilylenebis(4-(2,6-dimethylphenyl)-1-indenyl)dimethylhafnium
- Di-n-hexylsilylenebis(4-(4-tert-butyl-2-methylphenyl)-1-indenyl)dimethylhafnium
- Di-n-hexylsilylenebis(4-biphenylyl-1-indenyl)dimethylhafnium

Dicyclopentylsilylene-bridged Metallocene Compounds

- Dicyclopentylsilylenebis(4-phenyl-1-indenyl)dimethylhafnium
- Dicyclopentylsilylenebis(4-(3-methylphenyl)-1-indenyl)dimethylhafnium
- Dicyclopentylsilylenebis(4-(3-isopropylphenyl)-1-indenyl)dimethylhafnium
- Dicyclopentylsilylenebis(4-(3-tert-butylphenyl)-1-indenyl)dimethylhafnium
- Dicyclopentylsilylenebis(4-(4-methylphenyl)-1-indenyl)dimethylhafnium
- Dicyclopentylsilytenebis(4-(4-isopropylphenyl)-1-indenyl)dimethylhafnium
- Dicyclopentylsilylenebis(4-(4-tert-butylphenyl)-1-indenyl)dimethylhafnium
- Dicyclopentylsilylenebis(4-(4-trimethylsilylphenyl)-1-indenyl)dimethylhafnium
- Dicyclopentylsilylenebis(4-(2-methylphenyl)-1-indenyl)dimethylhafnium
- Dicyclopentylsilylenebis(4-(2-ethylphenyl)-1-indenyl)dimethylhafnium
- Dicyclopentylsilylenebis(4-(3,5-dimethylphenyl)-1-indenyl)dimethylhafnium
- Dicyclopentylsilylenebis(4-(3,5-di-tert-butylphenyl)-1-indenyl)dimethylhafnium
- Dicyclopentylsilylenebis(4-(3,5-ditrimethylsilylphenyl)-1-indenyl)dimethylhafnium
- Dicyclopentylsilylenebis(4-(2,3-dimethylphenyl)-1-indenyl)dimethylhafnium
- Dicyclopentylsilylenebis(4-(2,5-dimethylphenyl)-1-indenyl)dimethylhafnium
- Dicyclopentylsilylenebis(4-(2,6-dimethylphenyl)-1-indenyl)dimethylhafnium
- Dicyclopentylsilylenebis(4-(4-tert-butyl-2-methylphenyl)-1-indenyl)dimethylhafnium
- Dicyclopentylsilylenebis(4-biphenylyl-1-indenyl)dimethylhafnium

Trimethylenesilylene-bridged Metallocene Compounds

- Trimethylenesilylenebis(4-phenyl-1-indenyl)dimethylhafnium
- Trimethylenesilylenebis(4-(3-methylphenyl)-1-indenyl)dimethylhafnium
- Trimethylenesilylenebis(4-(3-isopropylphenyl)-1-indenyl)dimethylhafnium
- Trimethylenesilylenebis(4-(3-tert-butylphenyl)-1-indenyl)dimethylhafnium
- Trimethylenesilylenebis(4-(4-methylphenyl)-1-indenyl)dimethylhafnium

- Trimethylenesilylenebis(4-(4-isopropylphenyl)-1-indenyl)dimethylhafnium
- Trimethylenesilylenebis(4-(4-tert-butylphenyl)-1-indenyl)dimethylhafnium
- Trimethylenesilylenebis(4-(4-trifluoromethylphenyl)-1-indenyl)dimethylhafnium
- Trimethylenesilylenebis(4-(4-methoxyphenyl)-1-indenyl)dimethylhafnium
- Trimethylenesilylenebis(4-(4-isopropoxyphenyl)-1-indenyl)dimethylhafnium
- Trimethylenesilylenebis(4-(4-trimethylsilylphenyl)-1-indenyl)dimethylhafnium
- Trimethylenesilylenebis(4-(4-fluorophenyl)-1-indenyl)dimethylhafnium
- Trimethylenesilylenebis(4-(4-chlorophenyl)-1-indenyl)dimethylhafnium
- Trimethylenesilylenebis(4-(4-bromophenyl)-1-indenyl)dimethylhafnium
- Trimethylenesilylenebis(4-(2-methylphenyl)-1-indenyl)dimethylhafnium
- Trimethylenesilylenebis(4-(2-ethylphenyl)-1-indenyl)dimethylhafnium
- Trimethylenesilylenebis(4-(3,5-dimethylphenyl)-1-indenyl)dimethylhafnium
- Trimethylenesilylenebis(4-(3,5-diisopropylphenyl)-1-indenyl)dimethylhafnium
- Trimethylenesilylenebis(4-(3,5-di-tert-butylphenyl)-1-indenyl)dimethylhafnium
- Trimethylenesilylenebis(4-(3,5-dimethoxyphenyl)-1-indenyl)dimethylhafnium
- Trimethylenesilylenebis(4-(3,5-ditrimethylsilylphenyl)-1-indenyl)dimethylhafnium
- Trimethylenesilylenebis(4-(3,5-ditrifluoromethylphenyl)-1-indenyl)dimethylhafnium
- Trimethylenesilylenebis(4-(2,3-dimethylphenyl)-1-indenyl)dimethylhafnium
- Trimethylenesilylenebis(4-(2,5-dimethylphenyl)-1-indenyl)dimethylhafnium
- Trimethylenesilylenebis(4-(2,6-dimethylphenyl)-1-indenyl)dimethylhafnium
- Trimethylenesilylenebis(4-(2,3,5,6-tetramethylphenyl)-1-indenyl)dimethylhafnium
- Trimethylenesilylenebis(4-(2,3,4,5,6-pentamethylphenyl)-1-indenyl)dimethylhafnium
- Trimethylenesilylenebis(4-(4-tert-butyl-2-methylphenyl)-1-indenyl)dimethylhafnium
- Trimethylenesilylenebis(4-biphenylyl-1-indenyl)dimethylhafnium
- Trimethylenesilylenebis(4-(2,6-dimethylbiphenylyl)-1-indenyl)dimethylhafnium
- Trimethylenesilylenebis(4-(2',6'-dimethylbiphenylyl)-1-indenyl)dimethylhafnium
- Trimethylenesilylenebis(4-(1-naphthyl)-1-indenyl)dimethylhafnium
- Trimethylenesilylenebis(4-(2-naphthyl)-1-indenyl)dimethylhafnium
- Trimethylenesilylenebis(4-phenanthryl-1-indenyl)dimethylhafnium

Tetramethylenesilylene-bridged Metallocene Compounds

- Tetramethylenesilylenebis(4-phenyl-1-indenyl)dimethylhafnium
- Tetramethylenesilylenebis(4-(3-methylphenyl)-1-indenyl)dimethylhafnium
- Tetramethylenesilylenebis(4-(3-methylphenyl)-1-indenyl)dimethylhafnium
- Tetramethylenesilylenebis(4-(3-isopropylphenyl)-1-indenyl)dimethylhafnium
- Tetramethylenesilylenebis(4-(3-tert-butylphenyl)-1-indenyl)dimethylhafnium
- Tetramethylenesilylenebis(4-(4-methylphenyl)-1-indenyl)dimethylhafnium
- Tetramethytenesilylenebis(4-(4-isopropylphenyl)-1-indenyl)dimethylhafnium
- Tetramethylenesilylenebis(4-(4-tert-butylphenyl)-1-indenyl)dimethylhafnium
- Tetramethylenesilylenebis(4-(4-trimethylsilylphenyl)-1-indenyl)dimethylhafnium
- Tetramethylenesilylenebis(4-(2-methylphenyl)-1-indenyl)dimethylhafnium
- Tetramethylenesilylenebis(4-(2-ethylphenyl)-1-indenyl)dimethylhafnium
- Tetramethylenesilylenebis(4-(3,5-dimethylphenyl)-1-indenyl)dimethylhafnium
- Tetramethylenesilylenebis(4-(3,5-di-tert-butylphenyl)-1-indenyl)dimethylhafnium
- Tetramethylenesilylenebis(4-(3,5-ditrimethylsilylphenyl)-1-indenyl)dimethylhafnium
- Tetramethylenesilylenebis(4-(2,3-dimethylphenyl)-1-indenyl)dimethylhafnium
- Tetramethylenesilylenebis(4-(2,5-dimethylphenyl)-1-indenyl)dimethylhafnium
- Tetramethylenesilylenebis(4-(2,6-dimethylphenyl)-1-indenyl)dimethylhafnium
- Tetramethylenesilylenebis(4-(4-tert-butyl-2-methylphenyl)-1-indenyl)dimethylhafnium
- Tetramethylenesilylenebis(4-biphenylyl-1-indenyl)dimethylhafnium

Diphenylsilylene-bridged Metallocene Compounds

- Diphenylsilylenebis(4-phenyl-1-indenyl)dimethylhafnium
- Diphenylsilylenebis(4-(3-methylphenyl)-1-indenyl)dimethylhafnium
- Diphenylsilylenebis(4-(3-methylphenyl)-1-indenyl)dimethylhafnium
- Diphenylsilylenebis(4-(3-isopropylphenyl)-1-indenyl)dimethylhafnium

- Diphenylsilylenebis(4-(3-tert-butylphenyl)-1-indenyl)dimethylhafnium
- Diphenylsilylenebis(4-(4-methylphenyl)-1-indenyl)dimethylhafnium
- Diphenylsilylenebis(4-(4-isopropylphenyl)-1-indenyl)dimethylhafnium
- Diphenylsilylenebis(4-(4-tert-butylphenyl)-1-indenyl)dimethylhafnium
- Diphenylsilylenebis(4-(4-trimethylsilylphenyl)-1-indenyl)dimethylhafnium
- Diphenylsilylenebis(4-(2-methylphenyl)-1-indenyl)dimethylhafnium
- Diphenylsilylenebis(4-(2-ethylphenyl)-1-indenyl)dimethylhafnium
- Diphenylsilylenebis(4-(3,5-dimethylphenyl)-1-indenyl)dimethylhafnium
- Diphenylsilylenebis(4-(3,5-di-tert-butylphenyl)-1-indenyl)dimethylhafnium
- Diphenylsilylenebis(4-(3,5-ditrimethylsilylphenyl)-1-indenyl)dimethylhafnium
- Diphenylsilylenebis(4-(2,3-dimethylphenyl)-1-indenyl)dimethylhafnium
- Diphenylsilylenebis(4-(2,5-dimethylphenyl)-1-indenyl)dimethylhafnium
- Diphenylsilylenebis(4-(2,6-dimethylphenyl)-1-indenyl)dimethylhafnium
- Diphenylsilylenebis(4-(4-tert-butyl-2-methylphenyl)-1-indenyl)dimethylhafnium
- Diphenylsilylenebis(4-biphenylyl-1-indenyl)dimethylhafnium

Methyl(ethyl)silylene-bridged Metallocene Compounds

- Methyl(ethyl)silylenebis(4-phenyl-1-indenyl)dimethylhafnium
- Methyl(ethyl)silylenebis(4-(3-methylphenyl)-1-indenyl)dimethylhafnium Methyl(ethyl)silylenebis(4-(3-methylphenyl)-1-indenyl)dimethylhafnium
- Methyl(ethyl)silylenebis(4-(3-isopropylphenyl)-1-indenyl)dimethylhafnium
- Methyl(ethyl)silylenebis(4-(3-tert-butylphenyl)-1-indenyl)dimethylhafnium
- Methyl(ethyl)silylenebis(4-(4-methylphenyl)-1-indenyl)dimethylhafnium
- Methyl(ethyl)silylenebis(4-(4-isopropylphenyl)-1-indenyl)dimethylhafnium
- Methyl(ethyl)silylenebis(4-(4-tert-butylphenyl)-1-indenyl)dimethylhafnium
- Methyl(ethyl)silylenebis(4-(4-trimethylsilylphenyl)-1-indenyl)dimethylhafnium
- Methyl(ethyl)silylenebis(4-(2-methylphenyl)-1-indenyl)dimethylhafnium
- Methyl(ethyl)silylenebis(4-(2-ethylphehyl)-1-indenyl)dimethylhafnium
- Methyl(ethyl)silylenebis(4-(3,5-dimethylphenyl)-1-indenyl)dimethylhafnium
- Methyl(ethyl)silylenebis(4-(3,5-di-tert-butylphenyl)-1-indenyl)dimethylhafnium
- Methyl(ethyl)silylenebis(4-(3,5-ditrimethylsilylphenyl)-1-indenyl)dimethylhafnium
- Methyl(ethyl)silylenebis(4-(2,3-dimethylphenyl)-1-indenyl)dimethylhafnium
- Methyl(ethyl)silylenebis(4-(2,5-dimethylphenyl)-1-indenyl)dimethylhafnium
- Methyl(ethyl)silylenebis(4-(2,6-dimethylphenyl)-1-indenyl)dimethylhafnium
- Methyl(ethyl)silylenebis(4-(4-tert-butyl-2-methylphenyl)-1-indenyl)dimethylhafnium
- Methyl(ethyl)silylenebis(4-biphenylyl-1-indenyl)dimethylhafnium

Methyl(n-propyl)silylene-bridged Metallocene Compounds

- Methyl(n-propyl)silylenebis(4-phenyl-1-indenyl)dimethylhafnium
- Methyl(n-propyl)silylenebis(4-(3-methylphenyl)-1-indenyl)dimethylhafnium
- Methyl(n-propyl)silylenebis(4-(3-isopropylphenyl)-1-indenyl)dimethylhafnium
- Methyl(n-propyl)silylenebis(4-(3-tert-butylphenyl)-1-indenyl)dimethylhafnium
- Methyl(n-propyl)silylenebis(4-(4-methylphenyl)-1-indenyl)dimethylhafnium
- Methyl(n-propyl)silylenebis(4-(4-isopropylphenyl)-1-indenyl)dimethylhafnium
- Methyl(n-propyl)silylenebis(4-(4-tert-butylphenyl)-1-indenyl)dimethylhafnium
- Methyl(n-propyl)silylenebis(4-(4-trimethylsilylphenyl)-1-indenyl)dimethylhafnium
- Methyl(n-propyl)silylenebis(4-(2-methylphenyl)-1-indenyl)dimethylhafnium
- Methyl(n-propyl)silylenebis(4-(2-ethylphenyl)-1-indenyl)dimethylhafnium
- Methyl(n-propyl)silylenebis(4-(3,5-dimethylphenyl)-1-indenyl)dimethylhafnium
- Methyl(n-propyl)silylenebis(4-(3,5-di-tert-butylphenyl)-1-indenyl)dimethylhafnium
- Methyl(n-propyl)silylenebis(4-(3,5-ditrimethylsilylphenyl)-1-indenyl)dimethylhafnium
- Methyl(n-propyl)silylenebis(4-(2,3-dimethylphenyl)-1-indenyl)dimethylhafnium
- Methyl(n-propyl)silylenebis(4-(2,5-dimethylphenyl)-1-indenyl)dimethylhafnium
- Methyl(n-propyl)silylenebis(4-(2,6-dimethylphenyl)-1-indenyl)dimethylhafnium
- Methyl(n-propyl)silylenebis(4-(4-tert-butyl-2-methylphenyl)-1-indenyl)dimethylhafnium
- Methyl(n-propyl)silylenebis(4-biphenylyl-1-indenyl)dimethylhafnium

Methyl(n-butyl)silylene-bridged Metallocene Compounds

- Methyl(n-butyl)silylenebis(4-phenyl-1-indenyl)dimethylhafnium
- Methyl(n-butyl)silylenebis(4-(3-methylphenyl)-1-indenyl)dimethylhafnium
- Methyl(n-butyl)silylenebis(4-(3-isopropylphenyl)-1-indenyl)dimethylhafnium
- Methyl(n-butyl)silylenebis(4-(3-tert-butylphenyl)-1-indenyl)dimethylhafnium
- Methyl(n-butyl)silylenebis(4-(4-methylphenyl)-1-indenyl)dimethylhafnium
- Methyl(n-butyt)silylenebis(4-(4-isopropylphenyl)-1-indenyl)dimethyl)dimethylhafnium
- Methyl(n-butyl)silylenebis(4-(4-tert-butylphenyl)-1-indenyl)dimethylhafnium
- Methyl(n-butyl)silylenebis(4-(4-trimethylsilylphenyl)-1-indenyl)dimethylhafnium
- Methyl(n-butyl)silylenebis(4-(2-methylphenyl)-1-indenyl)dimethylhafnium
- Methyl(n-butyl)silylenebis(4-(2-ethylphenyl)-1-indenyl)dimethylhafnium
- Methyl(n-butyl)silylenebis(4-(3,5-dimethylphenyl)-1-indenyl)dimethylhafnium
- Methyl(n-butyl)silylenebis(4-(3,5-di-tert-butylphenyl)-1-indenyl)dimethylhafnium
- Methyl(n-butyl)silylenebis(4-(3,5-ditrimethylsilylphenyl)-1-indenyl)dimethylhafnium
- Methyl(n-butyl)silylenebis(4-(2,3-dimethylphenyl)-1 -indenyl)dimethylhafnium
- Methyl(n-butyl)silylenebis(4-(2,5-dimethylphenyl)-1-indenyl)dimethylhafnium
- Methyl(n-butyl)silylenebis(4-(2,6-dimethylphenyl)-1-indenyl)dimethylhafnium
- Methyl(n-butyl)silylenebis(4-(4-tert-butyl-2-methylphenyl)-1-indenyl)dimethylhafnium
- Methyl(n-butyl)silylenebis(4-biphenylyl-4-indenyl)dimethylhafnium

Methyl(hexyl)silylene-bridged Metallocene Compounds

- Methyl(hexyl)silylenebis(4-phenyl-1-indenyl)dimethylhafnium
- Methyl(hexyl)silylenebis(4-(3-methylphenyl)-1-indenyl)dimethylhafnium
- Methyl(hexyl)silylenebis(4-(3-isopropylphenyl)-1-indenyl)dimethylhafnium
- Methyl(hexyl)silylenebis(4-(3-tert-butylphenyl)-1-indenyl)dimethylhafnium
- Methyl(hexyl)silylenebis(4-(4-methylphenyl)-1-indenyl)dimethylhafnium
- Methyl(hexyl)silylenebis(4-(4-isopropylphenyl)-1-indenyl)dimethylhafnium
- Methyl(hexyl)silylenebis(4-(4-tert-butylphenyl)-1-indenyl)dimethylhafnium
- Methyl(hexyl)silylenebis(4-(4-trimethylsilylphenyl)-1-indenyl)dimethylhafnium
- Methyl(hexyl)silylenebis(4-(2-methylphenyl)-1-indenyl)dimethylhafnium
- Methyl(hexyl)silylenebis(4-(2-ethylphenyl)-1-indenyl)dimethylhafnium
- Methyl(hexyl)silylenebis(4-(3,5-dimethylphenyl)-1-indenyl)dimethylhafnium
- Methyl(hexyl)silylenebis(4-(3,5-di-tert-butylphenyl)-1-indenyl)dimethylhafnium
- Methyl(hexyl)silylenebis(4-(3,5-ditrimethylsilylphenyl)-1-indenyl)dimethylhafnium
- Methyl(hexyl)silylenebis(4-(2,3-dimethylphenyl)-1-indenyl)dimethylhafnium
- Methyl(hexyl)silylenebis(4-(2,5-dimethylphenyl)-1-indenyl)dimethylhafnium
- Methyl(hexyl)silylenebis(4-(2,6-dimethylphenyl)-1-indenyl)dimethylhafnium
- Methyl(hexyl)silylenebis(4-(4-tert-butyl-2-methylphenyl)-1-indenyl)dimethylhafnium
- Methyl(hexyl)silylenebis(4-biphenylyl-1-indenyl)dimethylhafnium

Methyl(cyclohexyl)silylene-bridged Metallocene Compounds

- Methyl(cyclohexyl)silylenebis(4-phenyl-1-indenyl)dimethylhafnium
- Methyl(cyclohexyl)silylenebis(4-(3-methylphenyl)-1-indenyl)dimethylhafnium
- Methyl(cyclohexyl)silylenebis(4-(3-isopropylphenyl)-1-indenyl)dimethylhafnium
- Methyl(cyclohexyl)silylenebis(4-(3-tert-butylphenyl)-1-indenyl)dimethylhafnium
- Methyl(cyclohexyl)silylenebis(4-(4-methylphenyl)-1-indenyl)dimethylhafnium
- Methyl(cyclohexyl)silylenebis(4-(4-isopropylphenyl)-1-indenyl)dimethylhafnium
- Methyl(cyclohexyl)silylenebis(4-(4-tert-butylphenyl)-1-indenyl)dimethylhafnium
- Methyl(cyclohexyl)silylenebis(4-(4-trimethylsilylphenyl)-1-indenyl)dimethylhafnium
- Methyl(cyclohexyl)silylenebis(4-(2-methylphenyl)-1-indenyl)dimethylhafnium
- Methyl(cyclohexyl)silylenebis(4-(2-ethylphenyl)-1-indenyl)dimethylhafnium
- Methyl(cyclohexyl)silylenebis(4-(3,5-dimethylphenyl)-1-indenyl)dimethylhafnium
- Methyl(cyclohexyl)silylenebis(4-(3,5-di-tert-butylphenyl)-1-indenyl)dimethylhafnium
- Methyl(cyclohexyl)silylenebis(4-(3,5-ditrimethylsilylphenyl)-1-indenyl)dimethylhafnium
- Methyl(cyclohexyl)silylenebis(4-(2,3-dimethylphenyl)-1-indenyl)dimethylhafnium

- Methyl(cyclohexyl)silylenebis(4-(2,5-dimethylphenyl)-1-indenyl)dimethylhafnium
- Methyl(cyclohexyl)silylenebis(4-(2,6-dimethylphenyl)-1-indenyl)dimethylhafnium
- Methyl(cyclohexyl)silylenebis(4-(4-tert-butyl-2-methylphenyl)-1-indenyl)dimethylhafnium
- Methyl(cyclohexyl)silylenebis(4-biphenylyl-1-indenyl)dimethylhafnium

Methyl(phenyl)silylene-bridged Metallocene Compounds

- Methyl(phenyl)silylenebis(4-phenyl-1-indenyl)dimethylhafnium Methyl(phenyl)silylenebis(4-(3-methylphenyl)-1-indenyl)dimethylhafnium
- Methyl(phenyl)silylenebis(4-(3-methylphenyl-1-indenyl)dimethylhafnium
- Methyl(phenyl)silylenebis(4-(3-isopropylphenyl)-1-indenyl)dimethylhafnium
- Methyl(phenyl)silylenebis(4-(3-tert-butylphenyl)-1-indenyl)dimethylhafnium
- Methyl(phenyl)silylenebis(4-(4-methylphenyl)-1-indenyl)dimethylhafnium
- Methyl(phenyl)silylenebis(4-(4-isopropylphenyl)-1-indenyl)dimethylhafnium
- Methyl(phenyl)silylenebis(4-(4-tert-butylphenyl)-1-indenyl)dimethylhafnium
- Methyl(phenyl)silylenebis(4-(4-trimethylsilylphenyl)-1-indenyl)dimethylhafnium
- Methyl(phenyl)silylenebis(4-(2-methylphenyl)-1-indenyl)dimethylhafnium
- Methyl(phenyl)silylenebis(4-(2-ethylphenyl)-1-indenyl)dimethylhafnium
- Methyl(phenyl)silylenebis(4-(3,5-dimethylphenyl)-1-indenyl)dimethylhafnium
- Methyl(phenyl)silylenebis(4-(3,5-di-tert-butylphenyl)-1-indenyl)dimethylhafnium
- Methyl(phenyl)silylenebis(4-(3,5-ditrimethylsilylphenyl)-1-indenyl)dimethylhafnium
- Methyl(phenyl)silylenebis(4-(2,3-dimethylphenyl)-1-indenyl)dimethylhafnium
- Methyl(phenyl)silylenebis(4-(2,5-dimethylphenyl)-1-indenyl)dimethylhafnium
- Methyl(phenyl)silylenebis(4-(2,6-dimethylphenyl)-1-indenyl)dimethylhafnium
- Methyl(phenyl)silylenebis(4-(4-tert-butyl-2-methylphenyl)-1-indenyl)diniethylhafnium
- Methyl(phenyl)silylenebis(4-biphenylyl-1-indenyl)dimethylhafnium

Methyl(2-phenylethyl)silylene-bridged Metallocene Compounds

- Methyl(2-phenylethyl)silylenebis(4-phenyl-1-indenyl)dimethylhafnium
- Methyl(2-phenylethyl)silylenebis(4-(3-methylphenyl)-1-indenyl)dimethylhafnium
- Methyl(2-phenylethyl)silylenebis(4-(3-isopropylphenyl)-1-indenyl)dimethylhafnium
- Methyl(2-phenylethyl)silylenebis(4-(3-tert-butylphenyl)-1-indenyl)dimethylhafnium
- Methyl(2-phenylethyl)silylenebis(4-(4-methylphenyl)-1-indenyl)dimethylhafnium
- Methyl(2-phenylethyl)silylenebis(4-(4-isopropylphenyl)-1-indenyl)dimethylhafnium
- Methyl(2-phenylethyl)silylenebis(4-(4-tert-butytphenyl)-1-indenyl)dimethylhafnium
- Methyl(2-phenylethyl)silylenebis(4-(4-trimethylsilylphenyl)-1-indenyl)dimethylhafnium
- Methyl(2-phenylethyl)silylenebis(4-(2-methylphenyl)-1-indenyl)dimethylhafnium
- Methyl(2-phenylethyl)silylenebis(4-(2-ethylphenyl)-1-indenyl)dimethylhafnium
- Methyl(2-phenylethyl)silylenebis(4-(3,5-dimethylphenyl)-1-indenyl)dimethylhafnium
- Methyl(2-phenylethyl)silylenebis(4-(3,5-di-tert-butylphenyl)-1-indenyl)dimethylhafnium
- Methyl(2-phenylethyl)silylenebis(4-(3,5-ditrimethylsilylphenyl)-1-indenyl)dimethylhafniu m
- Methyl(2-phenylethyl)silylenebis(4-(2,3-dimethylphenyl)-1-indenyl)dimethylhafnium
- Methyl(2-phenylethyl)silylenebis(4-(2,5-dimethylphenyl)-1-indenyl)dimethylhafnium
- Methyl(2-phenylethyl)silylenebis(4-(2,6-dimethylphenyl)-1-indenyl)dimethylhafnium
- Methyl(2-phenylethyl)silylenebis(4-(4-tert-butyl-2-methylphenyl)-1-indenyl)dimethylhafni um
- Methyl(2-phenylethyl)silylenebis(4-biphenylyl-1-indenyl)dimethylhafnium

Other examples thereof include the compounds shown above wherein one or each of $X^1$ and $X^2$ is not methyl but any of a chlorine atom, bromine atom, iodine atom, phenyl group, benzyl group, dimethylamino group, diethylamino group, trimethylsilylmethyl group, 1,3-butadiene, 1,4-diphenyl-1,3-butadiene,2,4-hexadiene, and the like.

Method for Synthesizing the Metallocene Compound:

The metallocene compound to be used in the invention can be synthesized by any desired method in accordance with the substituents or the mode of bonding. A representative example of synthesis routes is shown below.

[Chem. 3]

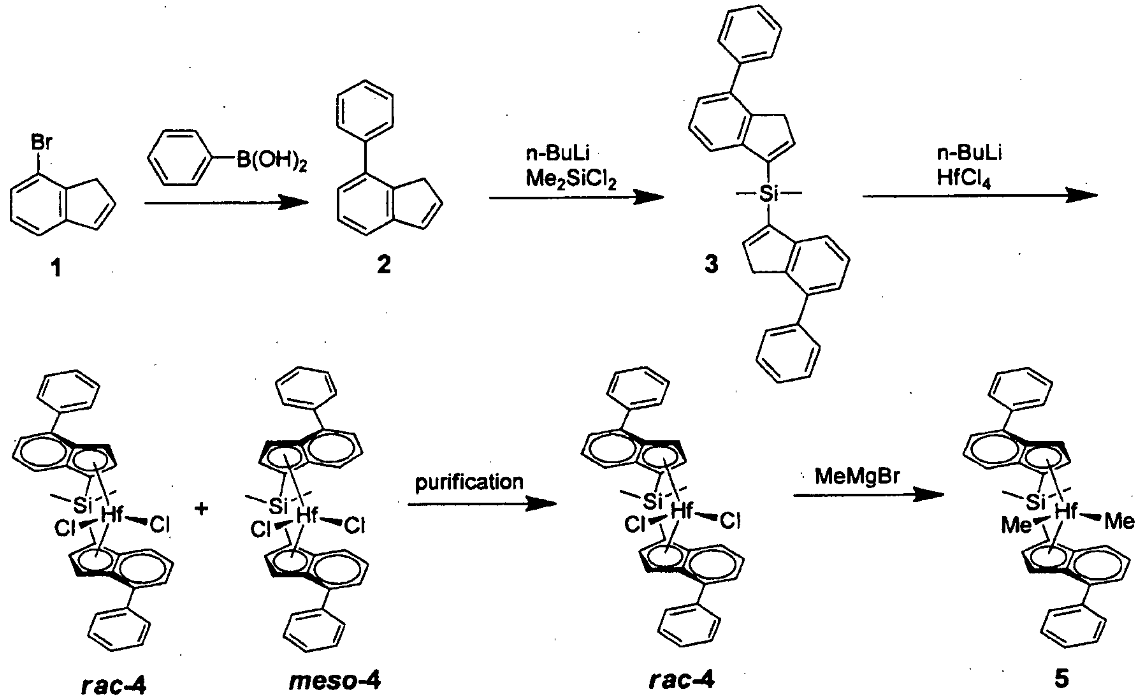


In the synthesis route, compound 1 is subjected to a coupling reaction with phenylboronic acid in the presence of a palladium catalyst to thereby obtain compound 2. Compound 3, which is a bridged form, is obtained by converting the compound 2 into an anion with, for example, butyllithium and then reacting the anion with dimethyldichlorosilane. The compound 3 is converted to a dianion with, for example, 2 equivalents of, for example, n-butyllithium and then reacted with hafnium tetrachloride, thereby obtaining metallocene compound 4. The metallocene compound 4 is generally obtained as a mixture of the racemic form and the meso form, and the racemic form, which brings about excellent catalytic performance, is concentrated by purification. Dimethyl form 5 can be obtained by treating the metallocene compound 4 with at least 2 equivalents of, for example, MeMgBr.

Metallocene compounds having substituents introduced thereinto can be synthesized by using corresponding substituted starting materials. One or more substituents can be introduced onto the phenyl group ($R^5$ to $R^9$ and $R^{15}$ to $R^{19}$) located at the 4-position of each indenyl ring, by using the corresponding boronic acid, e.g., 4-isopropylphenylboronic acid or 3,5-dimethylphenylboronic acid, in place of the phenylboronic acid.

A metallocene compound in which the substituents on the bridging group are different can be synthesized by using the corresponding substituted starting material. Substituents ($R^{10}$ and $R^{20}$) can be introduced onto the bridging group by using a silane compound having the $R^{10}$ and $R^{20}$ defined with regard to general formula [I], e.g., $R^{10}(R^{20})SiCl_2$, in place of the dimethyldichlorosilane.

2. Catalyst for Olefin Polymerization

(1) Catalyst for olefin polymerization

The catalyst for olefin polymerization to be used in the invention includes the following components (A) and (B) and optionally includes component (C).

Component (A): a metallocene compound represented by general formula [I]
Component (B): a compound which reacts with component (A) to form an ion pair, or an ion-exchanging layered silicate
Component (C): an organoaluminum compound

(2) With respect to each Component

(2-1) Component (A)

Two or more metallocene compounds represented by the same or different general formulae [I] may be used as component (A).

(2-2) Component (B)

Component (B) is either a compound which reacts with component (A) to form an ion pair, or an ion-exchanging layered silicate. Examples of the compound which reacts with component (A) to form an ion pair include organoaluminumoxy compounds, boron compounds, and zinc compounds. Preferred are organoaluminumoxy compounds or boron compounds. More preferred are boron compounds. Such components (B) may be used alone, or two or more thereof may be used.

(2-2-1) Organoaluminumoxy Compounds

The organoaluminumoxy compounds as one example of component (B) each have one or more Al-O-Al bonds in the molecule, and the number of these bonds is in the range of usually 1-100, preferably 1-50. Such an organoaluminumoxy compound is obtained usually by reacting an organoaluminum compound with water or an aromatic carboxylic acid.

The reaction between the organoaluminum and water is conducted usually in an inert hydrocarbon (solvent). As the inert hydrocarbon, use can be made of aliphatic hydrocarbons, alicyclic hydrocarbons, and aromatic hydrocarbons, such as pentane, hexane, heptane, cyclohexane, methylcyclohexane, benzene, toluene, and xylene. It is, however, preferred to use an aliphatic hydrocarbon or an aromatic hydrocarbon.

As the organoaluminum compound for preparing the organoaluminumoxy compounds, any of compounds represented by the following general formula [II] can be used. Preferably, however, a trialkylaluminum is used.

$$R^a_tAlX^a_{3-t} \qquad [II]$$

(In formula [II], $R^a$ represents a hydrocarbon group, e.g., an alkyl group having 1-18, preferably 1-12, carbon atoms, an alkenyl group, an aryl group, or an aralkyl group, $X^a$ represents a hydrogen atom or a halogen atom, and t represents an integer of $1 \leq t \leq 3$.

The alkyl groups of the trialkylaluminum may be any of methyl, ethyl, propyl, isopropyl, butyl, isobutyl, pentyl, hexyl, octyl, decyl, dodecyl, and the like. However, methyl and isobutyl are preferred, and methyl is more preferred.

Two or more of those organoaluminum compounds may be used as a mixture thereof.

It is preferable that the reaction ratio between water and the organoaluminum compound (water/Al molar ratio) should be from 0.25/1 to 1.2/1, in particular from 0.5/1 to 1/1. The reaction temperature is in the range of usually -70 to 100°C, preferably -20 to 20°C. The reaction time is selected from the range of usually 5 minutes to 24 hours, preferably 10 minutes to 5 hours. As the water to be subjected to the reaction, use can be made of not only mere water but also the crystal water contained in copper sulfate hydrate, aluminum sulfate hydrate, etc. Also usable is an ingredient which is capable of yielding water in the reaction system.

Of the organoaluminumoxy compounds shown above, the one obtained by reacting an alkylaluminum with water is usually called an aluminoxane. In particular, methylaluminoxane (including one substantially constituted of methylaluminoxane (MAO)) is suitable as the organoaluminumoxy compound.

It is, of course, possible to use two or more of those organoaluminumoxy compounds in combination. Use may also be made of a solution obtained by dissolving or dispersing any of those organoaluminumoxy compounds in the inert hydrocarbon solvent described above.

Examples of the organoaluminumoxy compounds can include compounds represented by the following general formula [III].

[Chem. 4]

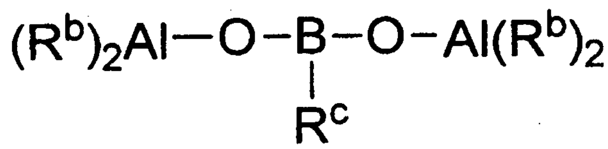

[III]

(In general formula [III], $R^b$ represents a hydrocarbon group, e.g., an alkyl group having 1-18, preferably 1-12, carbon atoms, an alkenyl group, an aryl group, or an aralkyl group, and $R^c$ represents a hydrocarbon group having 1-10 carbon atoms. The multiple $R^b$ moieties in formula [III] may be the same as or different from each other.)

The compounds represented by general formula [III] each can be obtained by reacting either one trialkylaluminum or two or more trialkylaluminums with an alkylboronic acid represented by the general formula $R^cB(OH)_2$, in a ratio of from 10:1 to 1:1 (molar ratio). In the general formula, $R^c$ represents a hydrocarbon group having 1-10, preferably 1-6, carbon atoms.

(2-2-2) Boron Compounds

Examples of the boron compounds, which are one example of component (B), include boron compounds such as borane compounds and borate compounds.

Specific examples of the borane compounds include triphenylborane, tri(o-tolyl)borane, tri(p-tolyl)borane, tri(m-tolyl)borane, tri(o-fluorophenyl)borane, tris(p-fluorophenyl)borane, tris(m-fluorophenyl)borane, tris(2,5-difluorophenyl)borane, tris(3,5-difluorophenyl)borane, tris(4-trifluoromethylphenyl)borane, tris(3,5-ditrifluoromethylphenyl)borane, tris(2,6-ditrifluoromethylphenyl)borane, tris(pentafluorophenyl)borane, tris(perfluoronaphthyl)borane, tris(perfluorobiphenyl)borane, tris(perfluoroanthryl)borane, and tris(perfluorobinaphthyl)borane.

More preferred of these are tris(3,5-ditrifluoromethylphenyl)borane, tris(2,6-ditrifluoromethylphenyl)borane, tris(pentafluorophenyl)borane, tris(perfluoronaphthyl)borane, tris(perfluorobiphenyl)borane, tris(perfluoroanthryl)borane, and tris(perfluorobinaphthyl)borane. Even more preferred are tris(2,6-ditrifluoromethylphenyl)borane, tris(pentafluorophenyl)borane, tris(perfluoronaphthyl)borane, and tris(perfluorobiphenyl)borane.

Specific examples of the borate compounds include, as first examples, compounds represented by the following general formula [IV].

$$[L^1\text{-}H]^+[BR^dR^eX^bX^c]^- \qquad [IV]$$

In formula [IV], $L^1$ is a neutral Lewis base, H is a hydrogen atom, and $[L^1\text{-}H]$ is a Brønsted acid, e.g., an ammonium, an anilinium, or a phosphonium. Examples of the ammonium include trialkyl-substituted ammoniums such as trimethylammonium, triethylammonium, tripropylammonium, tributylammonium, and tri(n-butyl)ammonium, and dialkylammoniums such as di(n-propyl)ammonium and dicyclohexylammonium.

Examples of the anilinium include N,N-dialkylaniliniums such as N,N-dimethylanilinium, N,N-diethylanilinium, and N,N-2,4,6-pentamethylanilinium.

Furthermore, examples of the phosphonium include triarylphosphoniums and trialkylphosphoniums, such as triphenylphosphonium, tributylphosphonium, tri(methylphenyl)phosphonium, and tri(dimethylphenyl)phosphonium.

In formula [IV], $R^d$ and $R^e$ are the same or different, aromatic or substituted aromatic hydrocarbon groups each containing 6-20, preferably 6-16, carbon atoms, and may have been linked to each other by a bridging group. Preferred examples of the substituents of the substituted aromatic hydrocarbon groups are alkyl groups represented by methyl, ethyl, propyl, isopropyl, and the like and halogens such as fluorine, chlorine, bromine, and iodine.

Furthermore, $X^b$ and $X^c$ each independently are a hydride group, a halogen atom, a hydrocarbon group containing 1-20 carbon atoms, or a substituted hydrocarbon group which contains 1-20 carbon atoms and in which one or more hydrogen atoms have been replaced by one or more halogen atoms.

Examples of the compounds represented by general formula [IV] include tributylammonium tetra(pentafluorophenyl)borate, tributylammonium tetra(2,6-ditrifluoromethylphenyl)borate, tributylammonium tetra(3,5-ditrifluoromethylphenyl)borate, tributylammonium tetra(2,6-difluorophenyl)borate, tributylammonium tetra(perfluoronaphthyl)borate, dimethylanilinium tetra(pentafluorophenyl)borate, dimethylanilinium tetra(2,6-ditrifluoromethylphenyl)borate, dimethylanilinium tetra(3,5-ditrifluoromethylphenyl)borate, dimethylanilinium tetra(2,6-difluorophenyl)borate, dimethylanilinium tetra(perfluoronaphthyl)borate, triphenylphosphonium tetra(pentafluorophenyl)borate, triphenylphosphonium tetra(2,6-ditrifluoromethylphenyl)borate, triphenylphosphonium tetra(3,5-ditrifluoromethylphenyl)borate, triphenylphosphonium tetra(2,6-difluorophenyl)borate, triphenylphosphonium tetra(perfluoronaphthyl)borate, trimethylammonium tetra(2,6-ditrifluoromethylphenyl)borate, triethylammonium tetra(pentafluorophenyl)borate, triethylammonium tetra(2,6-ditrifluoromethylphenyl)borate, triethylammonium tetra(perfluoronaphthyl)borate, tripropylammonium tetra(pentafluorophenyl)borate, tripropylammonium tetra(2,6-ditrifluoromethylphenyl)borate, tripropylammonium tetra(perfluoronaphthyl)borate, di(1-propyl)ammonium tetra(pentafluorophenyl)borate, and dicyclohexylammonium tetraphenylborate.

Preferred of these are tributylammonium tetra(pentafluorophenyl)borate, tributylammonium tetra(2,6-ditrifluoromethylphenyl)borate, tributylammonium tetra(3,5-ditrifluoromethylphenyl)borate, tributylammonium tetra(perfluoronaphthyl)borate, dimethylanilinium tetra(pentafluorophenyl)borate, dimethylanilinium tetra(2,6-ditrifluoromethylphenyl)borate, dimethylanilinium tetra(3,5-ditrifluoromethylphenyl)borate, and dimethylanilinium tetra(perfluoronaphthyl)borate.

Most preferred of these are tributylammonium tetra(pentafluorophenyl)borate, tributylammonium tetra(2,6-ditrifluoromethylphenyl)borate, tributylammonium tetra(3,5-ditrifluoromethylphenyl)borate, dimethylanilinium tetra(pentafluorophenyl)borate, dimethylanilinium tetra(2,6-ditrifluoromethylphenyl)borate, and dimethylanilinium tetra(3,5-ditrifluoromethylphenyl)borate.

Second examples of the borate compounds are represented by the following general formula [V].

$[L^2]^+[BR^dR^eX^bX^c]^-$ [V]

Examples of $L^2$ in formula [V] include a carbocation, methyl cation, ethyl cation, propyl cation, isopropyl cation, butyl cation, isobutyl cation, tert-butyl cation, pentyl cation, tropynium cation, benzyl cation, trityl cation, sodium cation, and proton. $R^d$, $R^e$, $X^b$, and $X^c$ have the same meanings as defined above with regard to general formula [IV].

Examples of the compounds represented by general formula [IV] include trityl tetraphenylborate, trityl tetra(o-tolyl)borate, trityl tetra(p-tolyl)borate, trityl tetra(m-tolyl)borate, trityl tetra(o-fluorophenyl)borate, trityl tetra(p-fluorophenyl)borate, trityl tetra(m-fluorophenyl)borate, trityl tetra(3,5-difluorophenyl)borate, trityl tetra(pentafluorophenyl)borate, trityl tetra(2,6-ditrifluoromethylphenyl)borate, trityl tetra(3,5-ditrifluoromethylphenyl)borate, trityl tetra(perfluoronaphthyl)borate, tropynium tetraphenylborate, tropynium tetra(o-tolyl)borate, tropynium tetra(p-tolyl)borate, tropynium tetra(m-tolyl)borate, tropynium tetra(o-fluorophenyl)borate, tropynium tetra(p-fluorophenyl)borate, tropynium tetra(m-fluorophenyl)borate, tropynium tetra(3,5-difluorophenyl)borate, tropynium tetra(pentafluorophenyl)borate, tropynium tetra(2,6-ditrifluoromethylphenyl)borate, tropynium tetra(3,5-ditrifluoromethylphenyl)borate, tropynium tetra(perfluoronaphthyl)borate, sodium tetraphenylborate, sodium tetra(o-tolyl)borate, sodium tetra(p-tolyl)borate, sodium tetra(m-tolyl)borate, sodium tetra(o-fluorophenyl)borate, sodium tetra(p-fluorophenyl)borate, sodium tetra(m-fluorophenyl)borate, sodium tetra(3,5-difluorophenyl)borate, sodium tetra(pentafluorophenyl)borate, sodium tetra(2,6-ditrifluoromethylphenyl)borate, sodium tetra(3,5-ditrifluoromethylphenyl)borate, sodium tetra(perfluoronaphthyl)borate, hydrogen tetraphenylborate 2-diethyl ether, hydrogen tetra(3,5-difluorophenyl)borate 2-diethyl ether, hydrogen tetra(pentafluorophenyl)borate 2-diethyl ether, hydrogen tetra(2,6-ditrifluoromethylphenyl)borate 2-diethyl ether, hydrogen tetra(3,5-ditrifluoromethylphenyl)borate 2-diethyl ether, and hydrogen tetra(perfluoronaphthyl)borate 2-diethyl ether.

Preferred of these are trityl tetra(pentafluorophenyl)borate, trityl tetra(2,6-ditrifluoromethylphenyl)borate, trityl tetra(3,5-ditrifluoromethylphenyl)borate, trityl tetra(perfluoronaphthyl)borate, tropynium tetra(pentafluorophenyl)borate, tropynium tetra(2,6-ditrifluoromethylphenyl)borate, tropynium tetra(3,5-ditrifluoromethylphenyl)borate, tropynium tetra(perfluoronaphthyl)borate, sodium tetra(pentafluorophenyl)borate, sodium tetra(2,6-ditrifluoromethylphenyl)borate, sodium tetra(3,5-ditrifluoromethylphenyl)borate, sodium tetra(perfluoronaphthyl)borate, hydrogen tetra(pentafluorophenyl)borate 2-diethyl ether, hydrogen tetra(2,6-ditrifluoromethylphenyl)borate 2-diethyl ether, hydrogen tetra(3,5-ditrifluoromethylphenyl)borate 2-diethyl ether, and hydrogen tetra(perfluoronaphthyl)borate 2-diethyl ether.

More preferred are trityl tetra(pentafluorophenyl)borate, trityl tetra(2,6-ditrifluoromethylphenyl)borate, tropynium tetra(pentafluorophenyl)borate, tropynium tetra(2,6-ditrifluoromethylphenyl)borate, sodium tetra(pentafluorophenyl)borate, sodium tetra(2,6-ditrifluoromethylphenyl)borate, hydrogen tetra(pentafluorophenyl)borate 2-diethyl ether, hydrogen tetra(2,6-ditrifluoromethylphenyl)borate 2-diethyl ether, and hydrogen tetra(3,5-ditrifluoromethylphenyl)borate 2-diethyl ether.

A mixture of any of the organoaluminumoxy compounds and any of the borane compounds and borate compounds can also be used as component (B) of the catalyst for olefin polymerization. Furthermore, two or more of the borane compounds and borate compounds can be used as a mixture thereof.

(2-2-3) Ion-exchanging layered silicate

The term "ion-exchanging layered silicate" (hereinafter often referred to simply as "silicate") means a silicate compound which has a crystalline structure made up of sheets that are each constituted by ionic bonds or the like and that have been stacked in parallel by bonding power, and in which the ions contained can be exchanged. Various kinds of silicates are known, and are described in detail in Haruo SHIROZU, Nendo Kōbutsu-gaku, Asakura Publishing Co., Ltd. (1995).

Silicates which are preferred for use as component (B) in the invention are ones belonging to the smectite group, and examples thereof include montmorillonite, sauconite, beidellite, nontronite, saponite, hectorite, and stevensite.

Since most natural silicates are yielded mainly as the main components of clay minerals, the silicates often contain impurities (quartz, cristobalite, etc.) as components other than ion-exchanging layered silicates. The smectite-group silicate to be used in the invention may contain impurities.

Granulation of Ion-exchanging layered silicate:

The silicate may be used in a dry state, or may be used in the state of having been slurried with a liquid. There

are no particular limitations on the shape of the ion-exchanging layered silicate, and the silicate may have the shape of the naturally occurring silicate or have the shape which the silicate had when synthesized artificially. Alternatively, an ion-exchanging layered silicate to which a shape has been imparted by an operation such as pulverization, granulation, classification, etc. may be used. Of these, granulated silicates are especially preferred because use of these silicates gives satisfactory polymer-particle properties.

The shape processing of the ion-exchanging layered silicate, such as granulation, pulverization, and classification, may be conducted before an acid treatment or may be conducted after an acid treatment is performed.

Examples of methods for granulation which can be used here include stirring granulation, spray granulation, rolling granulation, briquetting, compacting, extrusion granulation, fluidized-bed granulation, emulsion granulation, in-liquid granulation, and compression molding granulation. However, usable granulation methods are not particularly limited. Preferred examples thereof include stirring granulation, spray granulation, rolling granulation, and fluidized granulation. Especially preferred examples thereof include stirring granulation and spray granulation.

In the case of conducting spray granulation, use is made of water or an organic solvent, such as methanol, ethanol, chloroform, methylene chloride, pentane, hexane, heptane, toluene, or xylene, as the dispersion medium of a feed-material slurry. It is preferred to use water as the dispersion medium. The concentration of component (B) in the feed-material slurry to be subjected to spray granulation for obtaining spherical particles is 0.1-30% by weight, preferably 0.5-20% by weight, especially preferably 1-10% by weight. The inlet temperature of the hot air in spray granulation for obtaining spherical particles varies depending on the dispersion medium, but in the case of water, for example, the spraying is conducted at 80-260°C, preferably 100-220°C.

In the granulation, the silicate is reduced into finer particles according to need in order to obtain a support having high particle strength and to improve olefin polymerization activity. Any method may be used to reduce the silicate into finer particles. For the particle size reduction, either dry-process pulverization or wet-process pulverization can be used. Preferred is wet-process pulverization in which water is used as a dispersion medium to utilize the swelling properties of the silicate. For example, there are a method in which the size of the particles is reduced by forced agitation using Polytron or the like and a method in which the size of the particles is reduced with Dyno Mill, a pearl mill, or the like. The average particle diameter before the granulation is 0.01-3 $\mu$m, preferably 0.05-1 $\mu$m.

During the granulation, use may be made of organic substances, inorganic solvents, inorganic salts, and various binders. Examples of usable binders include magnesium chloride, aluminum sulfate, aluminum chloride, magnesium sulfate, alcohols, and glycols.

It is preferable that the spherical particles thus obtained should have a compression fracture strength of 0.2 MPa or higher from the standpoint of inhibiting the particles from being crushed or generating dust in the polymerization step. The granulated ion-exchanging layered silicate has a particle diameter in the range of 0.1-1,000 $\mu$m, preferably 1-500 $\mu$m. With respect to pulverization methods also, there are no particular limitations thereon, and either dry-process pulverization or wet-process pulverization may be used.

Acid Treatment:

Although the silicate to be used in the invention is used after being treated with an acid, the acid treatment may be conducted in combination with another chemical treatment. Examples of the other chemical treatment include an alkali treatment, a salt treatment, and a treatment with an organic substance.

By treating the silicate with an acid, the acid strength of the solid can be changed. Besides being effective in performing ion exchange or removing surface impurities, the acid treatment is effective in eluting some of cations, e.g., Al, Fe, Mg, or Li, present in the crystalline structure.

Examples of the acid to be used in the acid treatment include hydrochloric acid, nitric acid, sulfuric acid, phosphoric acid, acetic acid, oxalic acid, benzoic acid, stearic acid, propionic acid, acrylic acid, maleic acid, fumaric acid, and phthalic acid. Two or more of these acids may be simultaneously used. Preferred of those are the inorganic acids. Sulfuric acid, hydrochloric acid, and nitric acid are preferred, and sulfuric acid is more preferred.

Especially preferred is a method in which an acid treatment is conducted in combination with a salt treatment. Examples thereof include: a method in which a salt treatment is conducted and an acid treatment is performed thereafter; a method in which an acid treatment is conducted and a salt treatment is performed thereafter; a method in which a salt treatment and an acid treatment are simultaneously conducted; and a method in which a salt treatment is conducted and a salt treatment and an acid treatment are simultaneously performed thereafter.

With respect to conditions for the treatment with an acid, it is preferred to select conditions including an acid concentration of 0.1-30% by weight, a treatment temperature in the range of from room temperature to the boiling point of the solvent used, and a treatment period of 5 minutes to 24 hours to conduct the treatment under such conditions that at least some of the compound to be treated is dissolved away. In general, the acid is used as an aqueous solution. For example, in the case of using sulfuric acid, it is preferred to use a treatment temperature of 80-100°C and a treatment period of 0.5 hours or longer but less than 5 hours.

By simultaneously conducting a salt treatment, the surface area or the layer-to-layer spacing can be changed through the formation of an ionic complex, molecular complex, organic derivative, etc. For example, ion exchange properties are utilized to replace exchangeable ions present between layers by large and bulky ions, and a lamellar substance having an enlarged layer-to-layer spacing can be thus obtained.

In the case where the acid treatment is conducted, shape control may be performed by pulverization, granulation, etc. before, during, or after the treatment. Furthermore, another chemical treatment such as an alkali treatment, a treatment with an organic compound, or a treatment with an organometal may be conducted in combination with the acid treatment.

The salt to be used for the ion exchange is a compound including a cation which includes at least one atom selected from the group consisting of Group-1 to Group-14 atoms of the long-form periodic table (hereinafter referred to simply as "periodic table"). Preferred is a compound configured of: a cation which includes at least one atom selected from the group consisting of Group-1 to Group-14 atoms of the periodic table; and an anion induced from at least one atom or a group of atoms selected from the group consisting of halogen atoms, inorganic acids, and organic acids. More preferred is a compound configured of: a cation which includes at least one atom selected from the group consisting of Group-2 to Group-14 atoms of the periodic table; and at least one anion selected from the group consisting of Cl, Br, I, F, $PO_4$, $SO_4$ $NO_3$, $CO_3$, $C_2O_4$, $ClO_3$, $ClO_4$, $OOCCH_3$, $CH_3COCHCOCH_3$, $OCl_2$, $O(NO_3)_2$, $O(ClO_4)_2$, $O(SO_4)$, OH, $O_2Cl_2$, $OCl_3$, OOCH, $OOCCH_2CH_3$, $C_2H_4O_4$, and $C_6H_5O_7$. Two or more of these salts may be simultaneously used.

It is preferable that the silicate thus obtained should be one in which the volume of pores having a radius of 20 Å or larger, as measured by the mercury intrusion method, is 0.1 cc/g or larger, in particular 0.3-5 cc/g. In the case where this silicate has undergone a treatment in an aqueous solution, the silicate contains both adsorbed water and interlayer water. Here, the adsorbed water is the water which has been adsorbed onto the surface of the silicate or onto ruptured crystal surfaces, while the interlayer water is the water present in the interstices between the crystals.

It is preferable that the silicate should be used after the adsorbed water and the interlayer water are removed therefrom. Methods for dehydration are not particularly limited, and use may be made of methods such as dehydration by heating, dehydration by heating in a gas stream, dehydration by heating under vacuum, and dehydration by azeotropy with an organic solvent. The heating temperature is in such a range that neither the adsorbed water nor the interlayer water remains, and is usually 100°c or higher, preferably 150°C or higher. However, high-temperature conditions which result in structural fracture are undesirable. The heating period is 0.5 hours or longer, preferably 1 hour or longer. It is preferable that the silicate which has been thus dehydrated and dried should have a weight loss of 3% by weight or less in terms of the value determined after 2-hour suction conducted under the conditions of a temperature of 200°C and a pressure of 1 mmHg. It is preferable in the invention that in the case of using a silicate having a weight loss regulated to 3% by weight or less, this silicate should be handled so that the state of having the same weight loss is maintained even when the silicate is brought into contact with component (A) and component (C).

Composition of the Acid-treated Silicate:

From the standpoints of the activity of the polymerization catalyst and the molecular weight of the olefin polymer, it is preferable that the acid-treated silicate as component (B) according to the invention should be one which has an Al/Si atomic ratio in the range of 0.01-0.29, preferably 0.03-0.25, more preferably 0.05-0.23.

The Al/Si atomic ratio is an index to the acid treatment strength of the clay portion. With respect to methods for controlling the Al/Si atomic ratio, it is possible to control the ratio by regulating the kind and concentration of the acid to be used for the acid treatment, the period of the acid treatment, and the temperature therefor.

The contents of aluminum and silicon in the silicate are determined by a method in which calibration curves are drawn through chemical analysis conducted by a JIS method and the amount of each element is determined by fluorescent X-ray spectroscopy.

(2-3) Component (C)

In the invention, an organoaluminum compound as component (C) is used according to need.

An example of the organoaluminum compound is represented by the following general formula [VI].

$$AlR_aX_{3-a} \qquad [VI]$$

In general formula [VI], R represents a hydrocarbon group having 1-20 carbon atoms, X represents a hydrogen atom, a halogen, an alkoxy group, or a siloxy group, and a is a number larger than 0 but not larger than 3.

Examples of the organoaluminum compound represented by general formula [VI] include trialkylaluminums such as trimethylaluminum, triethylaluminum, tripropylaluminum, triisobutylaluminum, trihexylaluminum, and trioctylaluminum and halogen- or alkoxy-containing alkylaluminums such as diethylaluminum monochloride and diethylaluminum

monomethoxide. Preferred of these are trialkylaluminums. Most preferred is trihexylaluminum or trioctylaluminum. Two or more of those organoaluminum compounds may be used in combination.

(3) Methods for preparing the Catalyst

In methods for preparing the catalyst for olefin polymerization according to the invention, there are no particular limitations on methods for bringing component (A), component (B), and component (C) into contact with each other. However, examples thereof include the following methods. (i) Component (A) and component (B) are contacted with each other.

(ii) Component (A) and component (B) are contacted with each other, and component (C) is then added thereto.
(iii) Component (A) and component (C) are contacted with each other, and component (B) is then added thereto.
(iv) Component (B) and component (C) are contacted with each other, and component (A) is then added thereto.
(v) Components (A), (B), and (C) are simultaneously contacted with each other.

Furthermore, each component may be a mixture of different ingredients, or the ingredients may be separately contacted in different orders. Incidentally, this contact may be conducted not only during catalyst preparation but also during preliminary olefin polymerization or during olefin polymerization.

Moreover, a component may be contacted with the other components in installments, for example, in such a manner that component (B) and component (C) are contacted with each other and a mixture of component (A) and component (C) is then added thereto.

It is preferable that the contact between components (A), (B), and (C) should be conducted in an inert hydrocarbon solvent, such as pentane, hexane, heptane, toluene, or xylene, in an inert gas such as nitrogen. The contact can be conducted at a temperature in the range of -20°C to the boiling point of the solvent, and it is especially preferred to perform the contact at a temperature in the range of room temperature to the boiling point of the solvent.

(3-1) Catalyst Preparation Method in the case of using Boron Compound or Organoaluminumoxy Compound as Component (B)

Preferred examples of component (B) in the polymerization catalyst according to the invention include boron compounds or organoaluminumoxy compounds. Especially preferred are boron compounds. In the case where component (B) is an organoaluminumoxy compound, the molar ratio of component (A) to component (B) is from 1:0.1 to 1:100,000. In the case where component (B) is a boron compound, the molar ratio of component (A) to component (B) is preferably in the range of 1:0.1 to 1:100. In the case of using component (C), the molar ratio of component (A) to component (C) is preferably in the range of 1:0.1 to 1:10,000.

(3-2) Catalyst Preparation Method in the case of using Silicate as Component (B)

In the case where component (B) in the polymerization catalyst according to the invention is a silicate, the amounts of component (A), component (B), and component (C) to be used are preferably as follows. The amount of the metallocene compound as component (A), per g of component (B), is preferably 0.001-10 mmol, more preferably in the range of 0.001-1 mmol. The amount of component (C) to be used is such that the Al/metallocene compound molar ratio is from 0.1 to 100,000, preferably 1 to 10,000. These proportions of the components to be used are intended to show examples of ordinary proportions. So long as the catalyst does not defeat the objects of the invention, those ranges of proportions shown above should not be construed as limiting the present invention.

(3-3) Catalyst Preparation Method in the case of using Microparticulate Support other than Silicate, as Component (B)

In the case where component (B) is not a silicate, component (A), component (B), and/or component (C) according to the invention can be used in polymerization in the state of being supported on a microparticulate support other than silicates. Examples of the microparticulate support to be used include an inorganic support, a particulate polymer support, or mixtures of these. Usable as the inorganic support are metals, metal oxides, metal chlorides, metal carbonates, carbonaceous substances, or mixtures thereof.

Examples of metals suitable for use as the inorganic support include iron, aluminum, and nickel.

Examples of the metal oxides include single-metal oxides of elements belonging to Groups 1 to 14 of the periodic table and composite oxides of the elements. Specific examples thereof include natural or synthetic, various single-metal oxides or composite oxides, such as $SiO_2$, $Al_2O_3$, MgO, CaO, $B_2O_3$, $TiO_2$, $ZrO_2$, $Fe_2O_3$, $Al_2O_3{\cdot}MgO$, $Al_2O_3{\cdot}CaO$, $Al_2O_3{\cdot}SiO_2$, $Al_2O_3{\cdot}MgO{\cdot}CaO$, $Al_2O_3{\cdot}MgO{\cdot}SiO_2$, $Al_2O_3{\cdot}CuO$, $Al2O3{\cdot}Fe_2O_3$, $Al_2O_3{\cdot}NiO$, and $SiO_2{\cdot}MgO$.

Here, these formulae are not molecular formulae but merely show compositions. The composite oxides usable in the invention are each not particularly limited in the structure and component proportion thereof.

The metal oxides to be used in the invention may have absorbed a small amount of moisture, or may contain a slight amount of impurities.

Preferred as the metal chlorides are, for example, the chlorides of alkali metals and alkaline earth metals. Specifically, $MgCl_2$, $CaCl_2$, and the like are especially suitable.

Preferred as the metal carbonates are the carbonates of alkali metals and alkaline earth metals. Examples thereof include magnesium carbonate, calcium carbonate, and barium carbonate.

Examples of the carbonaceous substances include carbon black and activated carbon.

Although the inorganic supports shown above are each suitable for use in the invention, it is especially preferred to use metal oxides, silica, alumina, or the like.

It is preferable that these inorganic supports should be used after being burned at usually 200-800°C, preferably 400-600°C, in air or in an inert gas such as nitrogen or argon to regulate the surface hydroxy group content to 0.8-1.5 mmol/g.

The properties of these inorganic supports are not particularly limited. However, it is usually preferred to use an inorganic support having an average particle diameter of 5-200 μm, preferably 10-150 μm, an average pore diameter of 20-1,000 Å, preferably 50-500 Å, a specific surface area of 150-1,000 $m^2/g$, preferably 200-700 $m^2/g$, a pore volume of 0.3-2.5 $cm^3/g$, preferably 0.5-2.0 $cm^3/g$, and an apparent specific gravity of 0.20-0.50 $g/cm^3$, preferably 0.25-0.45 $g/cm^3$.

The inorganic supports shown above can, of course, be used as such. It is, however, possible to bring these supports into contact, as a pretreatment, with an organoaluminum compound, such as trimethylaluminum, triethylaluminum, triisobutylaluminum, trihexylaluminum, tripropylaluminum, tributylaluminum, trioctylaluminum, tridecylaluminum, or diisobutylaluminum hydride, or with an organoaluminumoxy compound containing an Al-O-Al bond and then use the treated supports.

When the catalyst for olefin polymerization which is constituted of component (A), a compound (component (B)) that reacts with the component (A) to form an ion pair, and a microparticulate support is obtained, methods for contacting the components are not particularly limited. For example, the following methods can be employed at will.

(I) Component (A) and component (B) are contacted with each other, and a microparticulate support is then contacted therewith.

(II) Component (A) and a microparticulate support are contacted with each other, and component (B) is then contacted therewith.

(III) Component (B) and a microparticulate support are contacted with each other, and component (A) is then contacted therewith.

Preferred of these contact methods are (I) and (III). Most preferred is (I). In any of these contact methods, the components are contacted usually in an inert atmosphere such as nitrogen or argon generally in the presence of a liquid inert hydrocarbon such as an aromatic hydrocarbon (usually having 6-12 carbon atoms), e.g., benzene, toluene, xylene, or ethylbenzene, or an aliphatic or alicyclic hydrocarbon (usually having 5-12 carbon atoms), e.g., heptane, hexane, decane, dodecane, or cyclohexane, with or without stirring.

It is desirable that this contact should be conducted at a temperature of usually -100°C to 200°C, preferably -50°C to 100°C, more preferably 0-50°C, for a period of 5 minutes to 50 hours, preferably 30 minutes to 24 hours, more preferably 30 minutes to 12 hours.

When component (A) and component (B) are brought into contact with a microparticulate support, use can be made of both an aromatic hydrocarbon solvent in which a component of some kind is soluble or sparingly soluble and an aliphatic or alicyclic hydrocarbon solvent in which a component of some kind is insoluble or sparingly soluble, as stated above.

In the case where the contact and reaction between the components are conducted in stages, the solvent which has been used in a preceding step may be used as such, without being removed, as a solvent for the contact and reaction in the subsequent step. After a preceding step for contact and reaction has been conducted using a solvent in which the product is soluble, use can be made of a method in which a liquid inert hydrocarbon in which a component of some kind is insoluble or sparingly soluble (e.g., an aliphatic hydrocarbon, alicyclic hydrocarbon, or aromatic hydrocarbon, such as pentane, hexane, decane, dodecane, cyclohexane, benzene, toluene, or xylene) is added to recover the desired product as a solid matter or the solvent in which the product is soluble is partly or wholly removed by drying or another means to take out the desired product as a solid matter, and the subsequent step for contact and reaction of the desired product is thereafter performed using any of the inert hydrocarbon solvents shown above. In the invention, each component may be subjected to contact and reaction in multiple times.

In the invention, the proportions of the component (A), component (B), and microparticulate support to be used

are not particularly limited. However, the following ranges are preferred.

In the case of using an organoaluminumoxy compound as component (B), the atomic ratio of the aluminum in the organoaluminumoxy compound to the transition metal (M) in component (A), Al/M, is in the range of usually 1-100,000, preferably 5-1,000, more preferably 50-400. In the case of using a borane compound or a borate compound, the atomic ratio of the boron to the transition metal (M) in component (A), B/M, is desirably selected from the range of usually 0.01-100, preferably 0.1-50, more preferably 0.2-10.

Furthermore, in the case where a mixture of an organoaluminumoxy compound, a borane compound, and a borate compound is used as the compound which forms an ion pair (component (B)), it is desirable that the proportion of each compound to be used in the mixture should be selected so that the proportion thereof to the transition metal (M) is the same as shown above.

The amount of the microparticulate support to be used is 1 g per 0.0001-5 mmol of the transition metal in component (A), preferably per 0.001-0.5 mmol thereof, more preferably per 0.01-0.1 mmol thereof.

Component (A), component (B), and a microparticulate support are contacted with each other by any of the contact methods (I) to (III) described above and, thereafter, the solvent is removed or the solid matter is cleaned/slurried with an inert solvent. Thus, a catalyst for olefin polymerization can be obtained as a solid catalyst. It is desirable that the solvent removal should be conducted at ordinary pressure or a reduced pressure and at 0-200°C, preferably 20-150°C, for 1 minute to 50 hours, preferably 10 minutes to 10 hours.

The catalyst for olefin polymerization can be obtained also by the following methods.

(IV) Component (A) and a microparticulate support are contacted with each other, and the solvent is removed. The resultant residue is used as a solid catalyst component and contacted, under polymerization conditions, with an organoaluminumoxy compound, a borane compound, a borate compound, or a mixture thereof.

(V) An organoaluminumoxy compound, a borane compound, a borate compound, or a mixture thereof is contacted with a microparticulate support, and the solvent is removed. The resultant residue is used as a solid catalyst component and contacted with component (A) under polymerization conditions.

For the contact methods in (IV) and (V) described above, the component ratio, contact conditions, and solvent removal conditions can be the same as those shown above.

Before the catalyst which includes component (A) and component (B) and optionally further includes component (C) is used as a catalyst for olefin polymerization (main polymerization), a preliminary polymerization treatment may be conducted according to need, in which an olefin such as ethylene, propylene, 1-butene, 1-hexene, 1-octene, 4-methyl-1-pentene, 3-methyl-1-butene, a vinylcycloalkane, or styrene is preliminarily polymerized in a small amount. For the preliminary polymerization, a known method can be used.

## 3. Methods for Ethylene/$\alpha$-olefin Copolymerization

In the invention, any polymerization mode can be employed so long as the polymerization catalyst including a metallocene compound represented by general formula [I] efficiently comes into contact with the monomers to enable the ethylene/$\alpha$-olefin copolymerization to proceed.

Specifically, use can be made of a slurry method and solution method in which an inert solvent is used, a bulk polymerization method and high-pressure ionic polymerization in which substantially no inert solvent is used and an olefin monomer is used as a solvent, or a vapor-phase polymerization method in which substantially no liquid solvent is used and each monomer is kept gaseous. Preferred examples include solution polymerization and high-pressure ionic polymerization. More preferred examples include high-pressure ionic polymerization.

With respect to polymerization manners, use may be made of continuous polymerization, batch polymerization, or a method in which preliminary polymerization is conducted. There are no particular limitations on combinations of polymerization modes, and use can be made of two-stage solution polymerization, two-stage bulk polymerization, a combination of bulk polymerization and subsequent vapor-phase polymerization, or two-stage vapor-phase polymerization. It is also possible to produce a copolymer through a larger number of polymerization stages.

Even when an ingredient for water removal, i.e., a so-called scavenger, is added to the polymerization system, the polymerization can be carried out without arousing any trouble.

As the scavenger, use can be made of organoaluminum compounds such as trimethylaluminum, triethylaluminum, triisobutylaluminum, trihexylaluminum, and trioctylaluminum, the organoaluminumoxy compounds shown above, modified organoaluminum compounds obtained by modifying those organoaluminum compounds with alcohols or phenols, organozinc compounds such as diethylzinc and dibutylzinc, organomagnesium compounds such as diethylmagnesium, dibutylmagnesium, and ethylbutylmagnesium, and Grignard compounds such as ethylmagnesium chloride and butylmagnesium chloride. Preferred of these are triethylaluminum, triisobutylaluminum, trihexylaluminum, and trioctylaluminum. Especially preferred are triisobutylaluminum, trihexylaluminum, and trioctylaluminum.

The molecular weight of the polymer to be yielded can be regulated by changing the polymerization conditions such as polymerization temperature, olefin monomer concentration, and molar ratio of the catalyst. Furthermore, molecular-weight regulation can be effectively attained also by adding hydrogen, the scavengers, or the like as a chain transfer agent to the polymerization reaction system.

The catalyst can be applied, without arousing any trouble, also to a multistage polymerization method including two or more stages which differ from each other in polymerization conditions such as hydrogen concentration, monomer amount, polymerization pressure, and polymerization temperature.

(1) Monomers to be polymerized

The term olefin in the invention means an unsaturated hydrocarbon, and the term "α-olefin" means an olefin in which the double bond is located at the α-position (between a terminal carbon atom and the next carbon atom). Examples of the α-olefin include ethylene, propylene, 1-butene, 1-pentene, 1-hexnene, 1-heptene, 1-octene, 1-decene, 1-dedecene, 1-hexadecene, 4-methyl-1-pentene, styrene, vinylcyclohexane, dienes, trienes, and cycloolefins. Preferred α-olefins have 3-20, more preferably 3-8, carbon atoms, and examples thereof include propylene, 1-butene, 1-hexene, 1-octene, and 4-methyl-1-pentene.

Two or more α-olefins can be copolymerized with ethylene.

The copolymerization may be any of alternating copolymerization, random copolymerization, and block copolymerization. In the case of copolymerizing ethylene with another α-olefin, the amount of the other α-olefin can be selected at will in the range of up to 90% by mole of all the monomers. However, the amount thereof is preferably 50% by mole or less. It is, of course, possible to use a small amount of comonomers other than α-olefins including ethylene. In this case, examples of the comonomers include aromatic vinyls such as styrene, 4-methylstyrene, and 4-dimethylaminostyrene, dienes such as 1,4-butadiene, 1,5-hexadiene, 1,4-hexadiene, 1,7-octadiene, 4-vinyl-1-cyclohexene, 5-vinyl-2-norbornene, 5-ethylidene-2-norbornene, and norbornadiene, and cyclic compounds such as norbornene and cyclopentene.

(2) Polymerization Temperature and Polymerization Pressure in Ethylene/α-olefin Copolymerization

A polymerization temperature of generally 0-300°C and a polymerization pressure of 0.1-300 MPa are used.

The polymerization temperature in the production process of the invention is desirably 110°C or higher, preferably 125°C or higher, more preferably 150°C or higher, most preferably 180°C or higher. An upper limit of the polymerization temperature is preferably 300°C or lower, more preferably 280°C or lower, even more preferably 260°C or lower, most preferably 250°C or lower. A suitable range of polymerization temperatures is preferably 110-300°C, more preferably 125-280°C, even more preferably 150-260°C, most preferably 180-250°C.

The polymerization pressure in the production process of the invention is desirably 2 MPa or higher, preferably 2-300 MPa, more preferably 50-200 MPa, most preferably 55-125 MPa.

Examples

The invention will be explained below in more detail by reference to Examples and Comparative Examples to demonstrate the prominence of the invention and the superiority of the configurations of the invention. However, the invention should not be construed as being limited by the following Examples.

The methods used for determining various properties of the polymers obtained in the Examples and Comparative Examples are as follows.

(1) Melt Flow Rate (MFR)

In accordance with JIS K7210 (2004-year edition), annex A, Table 1, conditions D, a value measured at a test temperature of 190°C and a nominal load of 2.16 kg was shown as MFR.

(2) Number-average Molecular Weight (Mn) and Molecular Weight Distribution (Mw/Mn)

Each ethylene-based polymer yielded was subjected to gel permeation chromatography (GPC) under the following conditions to determine the number-average molecular weight (Mn) and weight-average molecular weight (Mw), from which the molecular weight distribution (Mw/Mn) was calculated.

[Conditions for Gel Permeation Chromatography]

Apparatus: Alliance Type GPC2000, manufactured by Waters Inc.
Column: Shodex-HT806M
Solvent: 1,2-dichlorobenzene
Flow rate: 1 mL/min
Temperature: 145°C

Monodisperse polystyrene fractions were used to conduct universal calibration.

A measurement was made under the conditions shown above, and a chromatogram was recorded at sampling intervals of 1 second. From this chromatogram, a differential molecular weight distribution curve and average molecular-weight values (Mn, Mw) were calculated by the method described in Sadao MORI, *Saizu Haijo Kuromato-gurafi,* chapter 4, pp.51-60, Kyoritsu Shuppan Co., Ltd. However, the height H from the base line in the chromatogram was corrected using the following equation in order to correct the molecular-weight dependency of dn/dc.

$$H' = [1.032+189.2/M(PE)]\times H$$

For converting the molecular weight from polystyrene to polyethylene, the following equation was used.

$$M(PE) = 0.468\times M(PS)$$

(3) Density

A measurement was made in accordance with method A (underwater displacement method) among the test methods described in JIS K7112 (2004-year edition).

(4) Melting Point ($T_m$)

Using differential scanning calorimeter EXSTAR 6000 DSC, manufactured by Seiko Instruments & Electronics Ltd., a specimen (about 5 mg) was melted at 180°C for 5 minutes, subsequently cooled to -20°C at a rate of 10 °C/min, held at -20°C for 5 minutes, and then heated to 180°C at a rate of 10 °C/min to thereby obtain a melting curve. The peak top temperature for the main endothermic peak obtained in the final heating stage conducted for obtaining the melting curve was taken as the melting point $T_m$.

By performing the measurements (1) and (2) described above, the molecular weights of the polymer obtained can be evaluated. Namely, the smaller the value of MFR obtained in measurement (1) or the higher the number-average molecular weight obtained in measurement (2), the higher the molecular weight of the polymer.

In addition, by performing the measurement (3) described above, the copolymer can be evaluated for the content of the comonomer(s), in the Examples and the Comparative Examples, for the content of 1-hexene as an α-olefin. The smaller the value of density obtained in measurement (3), the higher the comonomer content of the polymer. Namely, in cases when different catalysts are used under the same temperature conditions and the same monomer ratio conditions to obtain polymers, the catalyst which yields a polymer having a lower density or having a higher hexene content is considered to be superior in copolymerization property (ability to efficiently incorporate the comonomer).

[1] Synthesis ofMetallocene Compounds

Metallocene Compound A: Synthesis of Dimethylsilylenebis(4-phenyl-1-indenyl)dimethylhafnium

[Chem. 5]

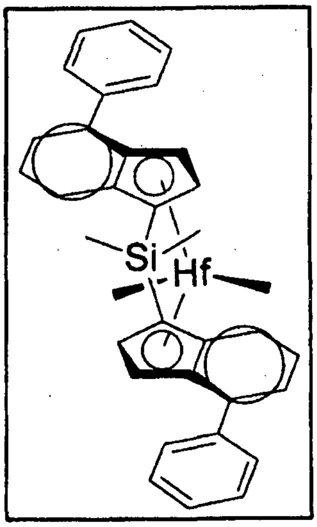

(Metallocene compound A)

(1) Synthesis of Dimethylbis(4-phenylinden-1-yl)silane

The compound was synthesized in accordance with the method described in a document (Organometallics, Vol.13, pp.954-963, 1994).

(2) Synthesis of Racemic Dimethylsilylenebis(4-phenyl-1-indenyl)hafnium Dichloride

Into a 200-mL reaction vessel made of glass were introduced 4.90 g (11.1 mmol) of the dimethylbis(4-phenylinden-1-yl)silane and 110 mL of diethyl ether. The contents were cooled to -70°C with a dry ice/heptane bath. Thereto was dropwise added 14.0 mL (22.7 mmol) of a 1.62 mol/L n-hexane solution of n-butyllithium. This mixture was stirred at room temperature for 3.5 hours. The solvent of the liquid reaction mixture was distilled off under vacuum, and 100 mL of toluene was added to the residue. The resultant mixture was cooled to -70°C with a dry ice/heptane bath. Thereto was added 3.56 g (11.1 mmol) of hafnium tetrachloride. Thereafter, the mixture was stirred for 17 hours while gradually returning the temperature thereof to room temperature. In the reaction product thus yielded, the proportion of the racemic form to the meso form was 55:45.

Thereto was added 200 mL of dichloromethane. This mixture was filtered with a Celite and then subjected to recrystallization in toluene, thereby obtaining 2.23 g of the racemic form of dimethylsilylenebis(4-phenyl-1-indenyl)hafnium dichloride as an orange solid (yield, 29%).

$^1$H-NMR (400 MHz, $CDCl_3$): δ 7.63 (d, 4H), 7.53 (d, 2H), 7.42 (t, 4H), 7.38-7.31 (m, 4H), 7.16 (dd, 2H), 7.01 (d, 2H), 6.10 (d, 2H), 1.18 (s, 6H).

(3) Synthesis of Racemic Dimethylsilylenebis(4-phenyl-1-indenyl)dimethylhafnium

Into a 100-mL reaction vessel made of glass were introduced 1.20 g (1.56 mmol) of the dimethylsilylenebis(4-phenyl-1-indenyl)hafnium dichloride and 50 mL of toluene. Thereto was dropwise added 3.6 mL (10.8 mmol) of a 3.0 mol/L diethyl ether solution of methylmagnesium bromide at room temperature. Thereafter, the mixture was stirred at 80°C for 1 hour. This liquid reaction mixture was cooled to 0°C with an ice bath. Thereafter, 0.98 mL (7.76 mmol) of chlorotrimethylsilane was added thereto, and this mixture was stirred at room temperature for 30 minutes. Subsequently, 2.0 mL (23.4 mmol) of 1,4-dioxane was added thereto, and this mixture was stirred at room temperature for further 30 minutes. The resultant suspension was filtered with a Celite, and the solvent was thereafter distilled off under vacuum. The yellow solid obtained was suspended in 10 mL of hexane, and this suspension was filtered with a glass frit. The solid was further washed three times with 5 mL of hexane, thereby obtaining 837 mg of the racemic form of dimethylsilylenebis(4-phenyl-1-indenyl)dimethylhafnium as a yellow solid (yield, 85%).

$^1$H-NMR (400 MHz, $C_6D_6$): δ 7.70 (dd, 4H), 7.27-7.18 (m, 8H), 7.15-7.07 (m, 4H), 6.90 (dd, 2H), 5.63 (d, 2H), 0.60 (s, 6H), -1.07 (s, 6H).

Metallocene Compound B (Comparative Example): Synthesis of Dimethylsilylenebis(2-methyl-4-phenyl-1-indenyl)dimethylhafnium

[Chem. 6]

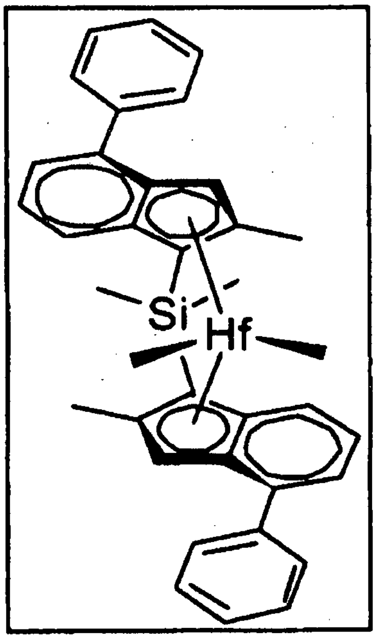

(Metallocene compound B)

(1) Synthesis of Racemic Dimethylsilylenebis(2-methyl-4-phenyl-1-indenyl)hafnium Dichloride

The compound was synthesized in accordance with the method described in JP-A-2001-253913.

(2) Synthesis of Racemic Dimethylsilylenebis(2-methyl-4-phenyl-1-indenyl)dimethylhafnium

Into a 100-mL reaction vessel made of glass were introduced 1.48 g (2.07 mmol) of the dimethylsilylenebis(2-methyl-4-phenyl-1-indenyl)hafnium dichloride and 60 mL of toluene. Thereto was dropwise added 14.0 mL (13.9 mmol) of a 0.99 mol/L tetrahydrofuran solution of methylmagnesium bromide at room temperature. This mixture was then stirred at 80°C for 3.5 hours. This liquid reaction mixture was cooled to 0°C with an ice bath. Thereafter, 1.0 mL (7.9 mmol) of chlorotrimethylsilane was added thereto, and this mixture was stirred at room temperature for 30 minutes. Subsequently, 2.7 mL (32 mmol) of 1,4-dioxane was added thereto, and this mixture was stirred at room temperature for further 30 minutes. The resultant suspension was filtered with a Celite, and the filtrate was concentrated under vacuum and then allowed to stand still at -20°C to cause recrystallization, thereby obtaining 322 mg of the racemic form of dimethylsilylenebis(2-methyl-4-phenyl-1-indenyl)dimethylhafnium as yellow crystals (yield, 23%).
$^1H$-NMR (400 MHz, $C_6D_6$): δ 7.75 (dd, 4H), 7.49 (d, 2H), 7.27 (d, 2H), 7.23 (t, 4H), 7.12 (t, 2H), 7.03 (s, 2H), 6.85 (dd, 2H), 2.00 (s, 6H), 0.80 (s, 6H), -0.83 (s, 6H).

Metallocene Compound C (Comparative Example): Synthesis of Dimethylsilylenebis(2-isopropyl-4-phenyl-1-indenyl)dimethylhafnium

[Chem. 7]

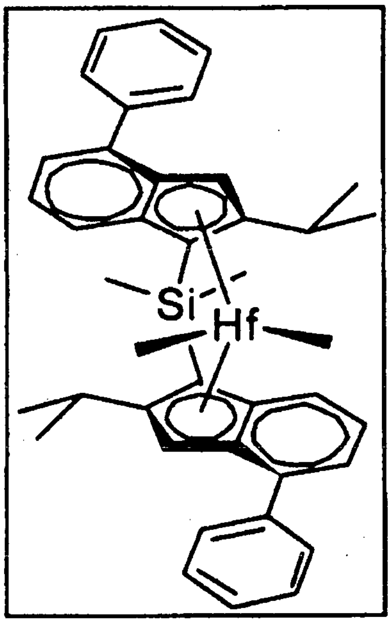

(Metallocene compound C)

(1) Synthesis of Dimethylbis(2-isopropyl-4-phenylinden-1-yl)silane

Into a 200-mL reaction vessel made of glass were introduced 2.00 g (8.52 mmol) of 2-isopropyl-4-phenylindene and 30 mL of THF. The contents were cooled to -78°C with a dry ice/methanol bath. Thereto was dropwise added 4.10 mL (10.2 mmol) of a 2.5 mol/L hexane solution of n-butyllithium. This mixture was stirred at room temperature for 4 hours and then cooled to -78°C. Thereto were added 0.34 mg (0.42 mmol) of 1-methylimidazole and 0.50 mL (4.26 mmol) of dimethyldichlorosilane in this order. The resultant mixture was stirred at room temperature for 1 hour. The solvent was distilled off under vacuum, and 30 mL of hexane was added to the residue. Thereafter, the suspension was filtered, and the solvent of the filtrate was distilled off under vacuum. The crude product obtained was purified by silica gel column chromatography (developing solvent, petroleum ether), thereby obtaining 1.00 g (yield, 45%) of dimethylbis(2-isopropyl-4-phenylinden-1-yl)silane as a light-yellow solid.

(2) Synthesis of Racemic Dimethylsilylenebis(2-isopropyl-4-phenyl-1-indenyl)hafnium Dichloride

Into a 200-mL reaction vessel made of glass were introduced 3.34 g (6.36 mmol) of the dimethylbis(2-isopropyl-4-phenylinden-1-yl)silane and 50 mL of diethyl ether. The contents were cooled to -70°C with a dry ice/heptane bath. Thereto was dropwise added 8.0 mL (12.8 mmol) of a 1.62 mol/L n-hexane solution of n-butyllithium. This mixture was stirred for 2.5 hours. The solvent of this liquid reaction mixture was distilled off under vacuum, and 65 mL of toluene was added to the residue. The resultant mixture was cooled to -70°C with a dry ice/heptane bath. Thereto was added 2.04 g (6.37 mmol) of hafnium tetrachloride. Thereafter, the mixture was stirred for 17 hours while gradually returning the temperature thereof to room temperature.

The reaction solution was filtered with a Celite, and the filtrate was repeatedly subjected to concentration and recrystallization, thereby obtaining 1.20 g of a racemic/meso mixture of dimethylsilylenebis(2-isopropyl-4-phenylindenyl)hafnium dichloride in which the racemic form/meso form ratio was 77/23. To this mixture were added 60 mg of anhydrous lithium chloride and 6 mL of 1,2-dimethoxyethane. The resultant mixture was stirred at 60°C for 5 hours. This liquid reaction mixture was cooled to room temperature and then filtered with a glass frit, and the solid was washed twice with 5 mL of dimethyl ether (DME), thereby obtaining 464 mg of the racemic form of dimethylsilylenebis(2-isopropyl-4-phenyl-1-indenyl)hafnium dichloride as an orange solid (yield, 10%).

$^{1}$H-NMR (400 MHz, $CDCl_3$): δ 7.74-7.70 (m, 6H), 7.44 (t, 4H), 7.40-7.28 (m, 4H), 7.07 (dd, 2H), 6.89 (s, 2H), 3.31 (sep, 2H), 1.36 (s, 6H), 1.14 (d, 6H), 1.11 (d, 6H).

(3) Synthesis of Racemic Dimethylsilylenebis(2-isopropyl-4-phenyl-1-indenyl)dimethylhafnium

Into a 100-mL reaction vessel made of glass were introduced 444 mg (0.575 mmol) of the dimethylsilylenebis(2-isopropyl-4-phenyl-1-indenyl)hafnium dichloride and 20 mL of toluene. Thereto was dropwise added 4.3 mL (4.6 mmol) of a 1.06 mol/L diethyl ether solution of methyllithium at room temperature. Thereafter, the mixture was stirred at 80°C for 5 hours. The liquid reaction mixture was filtered with a Celite, and the filtrate was concentrated under vacuum and then allowed to stand still at -20°C to cause recrystallization, thereby obtaining 203 mg of the racemic form of dimethylsilylenebis(2-isopropyl-4-phenyl-1-indenyl)dimethylhafnium as yellow crystals (yield, 48%).
$^1$H-NMR (400 MHz, $C_6D_6$): δ 7.80 (dd, 4H), 7.50 (d, 2H), 7.36-7.16 (m, 8H), 7.11 (t, 2H), 6.85 (t, 2H), 3.06 (sep, 2H), 1.15 (d, 6H), 0.95 (d, 6H), -0.83 (s, 6H).

Metallocene Compound D (Comparative Example): Synthesis of Dimethylsilylenebis(2,4-dimethy-1-indenyl)dimethylhafnium

[Chem. 8]

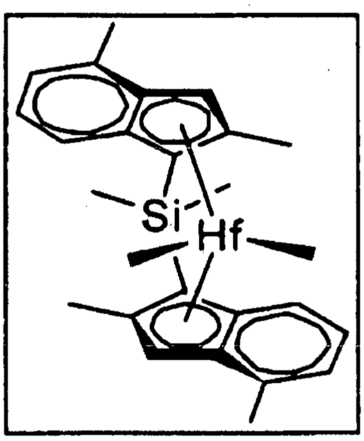

(Metallocene compound D)

(1) Synthesis of Dimethylbis(2,4-dimethylinden-1-yl)silane

The compound was synthesized in accordance with the method described in Japanese Patent No. 3389265.

(2) Synthesis of Racemic Dimethylsilylenebis(2,4-dimethyl-1-indenyl)hafnium Dichloride

Into a 200-mL reaction vessel made of glass were introduced 5.50 g (16.0 mmol) of the dimethylbis(2-methyl-4-methylinden-1-yl)silane and 60 mL of diethyl ether. The contents were cooled to -70°C with a dry ice/heptane bath. Thereto was dropwise added 14.0 mL (35.2 mmol) of a 2.5 mol/L n-hexane solution of n-butyllithium. This mixture was stirred at room temperature for 2 hours and then at 50°C for 2 hours. The solvent of the liquid reaction mixture was distilled off under vacuum, and 60 mL of diethyl ether was added to the residue. The resultant mixture was cooled to -70°C with a dry ice/heptane bath. Thereto was added 5.60 g (17.6 mmol) of hafnium tetrachloride. Thereafter, the mixture was stirred for 4 hours while gradually returning the temperature thereof to room temperature.
Thereto was added 150 mL of dichloromethane. The resultant mixture was filtered with a Celite, and the filtrate was then concentrated to cause recrystallization, thereby obtaining 0.30 g of the racemic form of dimethylsilylenebis(2,4-dimethyl-indenyl)hafnium dichloride as a yellow solid.
$^1$H-NMR (400 MHz, $CDCl_3$): δ 7.56 (d, 2H), 7.10 (d, 2H), 6.93 (dd, 2H), 6.70 (s, 2H), 2.37 (s, 6H), 2.33 (s, 6H), 1.31 (s, 6H).

(3) Synthesis of Racemic Dimethylsilylenebis(2,4-dimethyl-1-indenyl)dimethylhafnium

Into a 100-mL reaction vessel made of glass were introduced 0.592 g (1.00 mmol) of the dimethylsilylenebis(2,4-dimethyl-indenyl)hafnium dichloride and 30 mL of toluene. Thereto was dropwise added 6.8 mL (6.7 mmol) of a 0.99 mol/L tetrahydrofuran solution of methylmagnesium bromide at room temperature. Thereafter, the mixture was stirred

at 80°C for 7.5 hours. This liquid reaction mixture was cooled to 0°C with an ice bath. Thereafter, 0.60 mL (4.7 mmol) of chlorotrimethylsilane was added thereto, and this mixture was stirred at room temperature for 30 minutes. Subsequently, 1.3 mL (15 mmol) of 1,4-dioxane was added thereto, and this mixture was stirred at room temperature for further 30 minutes. The resultant suspension was filtered with a Celite, and the solvent was distilled off under vacuum. Thereafter, the yellow solid obtained was suspended in 10 mL of hexane, and this suspension was filtered with a glass frit. The solid was further washed twice with 3 mL of hexane, thereby obtaining 310 mg of the racemic form of dimethylsilylenebis(2,4-dimethyl-indenyl)dimethylhafnium as a white solid (yield, 56%).
$^1$H-NMR (400 MHz, $C_6D_6$): δ 7.39 (d, 2H), 6.96 (d, 2H), 6.79 (dd, 2H), 6.57 (s, 2H), 2.28 (s, 6H), 2.03 (s, 6H), 0.80 (s, 6H), -1.08 (s, 6H).

Metallocene Compound E (Comparative Example): Synthesis of Dimethylsilylenebis(2-methyl-4-isopropyl-1-indenyl)dimethylhafnium

[Chem. 9]

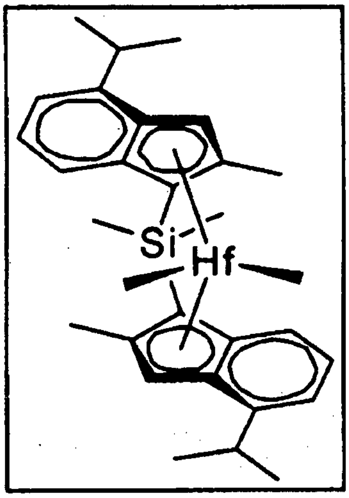

(Metallocene compound E)

(1) Synthesis of Dimethylbis(2-methyl-4-isopropylinden-1-yl)silane

The compound was synthesized in accordance with the method described in Japanese Patent No. 3482412.

(2) Synthesis of Racemic Dimethylsilylenebis(2-methyl-4-isopropyl-1-indenyl)hafnium Dichloride

Into a 200-mL reaction vessel made of glass were introduced 3.15 g (7.86 mmol) of the dimethylbis(2-methyl-4-isopropylinden-1-yl)silane and 45 mL of diethyl ether. The contents were cooled to -70°C with a dry ice/heptane bath. Thereto was dropwise added 6.6 mL (16.5 mmol) of a 2.5 mol/L n-hexane solution of n-butyllithium. This mixture was stirred at room temperature for 2 hours and then at 50°C for 2 hours. The solvent of the liquid reaction mixture was distilled off under vacuum, and 45 mL of diethyl ether was added to the residue. The resultant mixture was cooled to -70°C with a dry ice/heptane bath. Thereto was added 2.64 g (8.26 mmol) of hafnium tetrachloride. Thereafter, the mixture was stirred for 16 hours while gradually returning the temperature thereof to room temperature.

The liquid reaction mixture was filtered. The solid obtained was extracted with 20 mL of dichloromethane, and filtration was conducted again. Thereafter, the solvent of the filtrate was distilled off under vacuum, thereby obtaining 0.50 g of the racemic form of dimethylsilylenebis(2-methyl-4-isopropyl-1-indenyl)hafnium dichloride as a yellow solid.
$^1$H-NMR (400 MHz, $CDCl_3$): δ 7.54 (d, 2H), 7.16 (d, 2H), 6.98 (dd, 2H), 6.76 (s, 2H), 3.06 (sep, 2H), 2.34 (s, 6H), 1.34 (d, 6H), 1.28 (s, 6H), 1.25 (d, 6H).

(3) Synthesis of Racemic Dimethylsilylenebis(2-methyl-4-isopropyl-1-indenyl)dimethylhafnium

Into a 100-mL reaction vessel made of glass were introduced 0.573 g (0.884 mmol) of the dimethylsilylenebis(2-methyl-4-isopropyl-1-indenyl)hafnium dichloride and 27 mL of toluene. Thereto was dropwise added 6.2 mL (6.1 mmol) of a 0.99 mol/L tetrahydrofuran solution of methylmagnesium bromide at room temperature. Thereafter, the mixture was stirred at 80°C for 5 hours. This liquid reaction mixture was cooled to 0°C with an ice bath. Thereafter, 0.45 mL (3.6 mmol) of chlorotrimethylsilane was added thereto, and this mixture was stirred at room temperature for 30 minutes. Subsequently, 0.90 mL (11 mmol) of 1,4-dioxane was added thereto, and this mixture was stirred at room temperature for further 30 minutes. The resultant suspension was filtered with a Celite, and the solvent was distilled off under vacuum. Thereafter, the yellow solid obtained was suspended in 10 mL of hexane, and this suspension was filtered with a glass frit. The solid was further washed twice with 3 mL of hexane, thereby obtaining 382 mg of the racemic form of dimethylsilylenebis(2-methyl-4-isopropyl-1-indenyl)dimethylhafnium as a while solid (yield, 71%).
$^1$H-NMR (400 MHz, $C_6D_6$): δ 7.41 (d, 2H), 7.10 (d, 2H), 6.82 (t, 2H), 6.73 (s, 2H), 3.11 (sep, 2H), 2.07 (s, 6H), 1.36 (d, 2H), 1.27 (d, 6H), 0.83 (s, 6H), -1.06 (s, 6H).

Metallocene Compound F (Comparative Example): Synthesis of Cyclobutylidenebis(1-indenyl)dimethylhafnium

[Chem. 10]

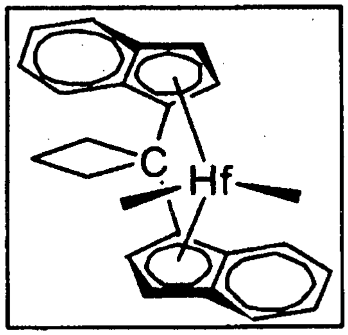

(Metallocene compound F)

(1) Synthesis of 1,1-Bis(1-indenyl)cyclobutane

Into a 200-mL reaction vessel made of glass were introduced 25.0 g (215 mmol) of indene, 250 mL of DME, and 27.0 g (480 mmol) of sodium hydroxide. The contents were refluxed with heating at 90°C for 1 hour. This liquid reaction mixture was cooled to 0°C, and 8.40 g (120 mmol) of cyclobutanone was added thereto. The resultant mixture was refluxed with heating at 90°C for 6 hours. This liquid reaction mixture was cooled to room temperature, and 200 mL of distilled water was added thereto. Thereafter, the mixture was transferred to a separatory funnel and extracted twice with ethyl acetate. The ethyl acetate solution obtained was washed with saturated aqueous sodium chloride solution and distilled water in this order and dried with sodium sulfate. The sodium sulfate was removed by filtration, and the solvent was distilled off under vacuum. The crude product obtained was purified by silica gel column chromatography (developing solvent, petroleum ether), thereby obtaining 12.0 g of 1,1-bis(1-indenyl)cyclobutane as a white solid (yield, 39%).
$^1$H-NMR (400 MHz, $CDCl_3$): δ 7.39 (t, 4H), 7.11 (quint, 4H), 6.62 (s, 2H), 3.40 (s, 4H), 2.73 (t, 4H), 2.09 (quint, 2H).

(2) Synthesis of Racemic Cyclobutylidenebis(1-indenyl)hafnium Dichloride

Into a 200-mL reaction vessel made of glass were introduced 2.84 g (10.0 mmol) of the 1,1-bis(1-indenyl)cyclobutane and 100 mL of diethyl ether. The contents were cooled to -70°C with a dry ice/heptane bath. Thereto was dropwise added 12.4 mL (20.5 mmol) of a 1.64 mol/L n-hexane solution of n-butyllithium. This mixture was stirred at room temperature for 4 hours. The solvent of the liquid reaction mixture was distilled off under vacuum, and 115 mL of toluene was added to the residue. The resultant mixture was cooled to -70°C with a dry ice/heptane bath. Thereto was added 3.20 g (10.0 mmol) of hafnium tetrachloride. Thereafter, the mixture was stirred for 17 hours while gradually returning the temperature thereof to room temperature.
The solvent of the liquid reaction mixture was distilled off under vacuum, and 26 mL of 1,2-dimethoxyethane was added to the residue. This mixture was stirred at 60°C for 5 hours. The liquid reaction mixture was cooled to room temperature and filtrated with a glass frit. The solid obtained was extracted with 130 mL of dichloromethane, and the

extract was filtered with a Celite. The filtrate was dried under vacuum, thereby obtaining 3.76 g of the racemic form of cyclobutylidenebis(1-indenyl)hafnium dichloride as a yellow solid (yield, 71%).
$^1$H-NMR (400 MHz, $CDCl_3$): $\delta$ =7.51 (d, 2H), 7.48 (d, 2H), 7.27 (dd, 2H), 6.98 (dd, 2H), 6.53 (d, 2H), 5.97 (d, 2H), 3.54 (quart, 2H), 3.12 (quart, 2H), 2.46 (quint, 2H).

(3) Synthesis of Cyclobutylidenebis(1-indenyl)dimethylhafnium

Into a 200-mL reaction vessel made of glass were introduced 1.50 g (2.82 mmol) of the cyclobutylidenebis(1-indenyl)hafnium dichloride and 70 mL of toluene. Thereto was dropwise added 6.6 mL (19.8 mmol) of a 3.0 mol/L diethyl ether solution of methylmagnesium bromide at room temperature. Thereafter, the mixture was stirred at 80°C for 7 hours. This liquid reaction mixture was cooled to 0°C with an ice bath, and 1.75 mL (13.9 mmol) of chlorotrimethylsilane was then added thereto. The resultant mixture was stirred at room temperature for 30 minutes. Subsequently, 3.50 mL (40.9 mmol) of 1,4-dioxane was added, and this mixture was stirred at room temperature for further 1 hour. The resultant suspension was filtered with a Celite, and solvent was then distilled off under vacuum. The yellow solid obtained was suspended in 10 mL of hexane, and the suspension was filtered with a glass frit. The solid was further washed twice with 5 mL of hexane, thereby obtaining 810 mg of the racemic form of cyclobutylidenebis(indenyl)dimethylhafnium as a yellow solid (yield, 59%).
$^1$H-NMR (400 MHz, $C_6D_6$): $\delta$ 7.37 (d, 2H), 7.11 (dd, 2H), 7.05 (dd, 2H), 7.23 (dd, 2H), 6.33 (d, 2H), 5.42 (d, 2H), 2.98 (quart, 2H), 2.54 (quart, 2H), 2.02 (quint, 2H), -1.16 (s, 6H).

[2] Batch Solution Polymerization: Ethylene/1-hexene Copolymerization

(Example 1) Ethylene/1-hexene Copolymerization using Metallocene Compound A

Into a 2.3-L stainless-steel autoclave (equipped with a stirrer and a thermostat) which had been sufficiently dried and undergone nitrogen displacement were introduced 1,000 mL of toluene and 33 mL of 1-hexene. The contents were heated to 150°C. After the internal temperature of the reactor had become stable, the pressure was elevated to 0.7 MPaG with nitrogen and then to 2.7 MPaG with ethylene. Thereafter, 0.1 mmol of tri(n-octyl)aluminum was forced thereinto with nitrogen, and a solution obtained by bringing a solution of 0.10 $\mu$mol of metallocene compound A in 1 mL of toluene into contact, at room temperature in a nitrogen atmosphere, with a solution of 0.05 $\mu$mol of cocatalyst $[Me_2N(H)C_6H_5][B(C_6F_5)_4]$ in 1 mL of toluene and then stirring the mixture at room temperature for 10 minutes was forced thereinto with nitrogen to initiate polymerization. Thereafter, the reaction mixture was stirred for 5 minutes while regulating the internal pressure at 2.7 MPa, and ethanol was then forced thereinto with nitrogen to thereby terminate the reaction. After the temperature was lowered, the product was dried, thereby obtaining a polymer. Amount of the polymer yielded, 7.4 g.

Polymer indexes: density = 0.9020 g/cm$^3$, MFR = 1.10 g/10 min, weight-average molecular weight Mw = 102,700, number-average molecular weight Mn = 54,300, Mw/Mn = 1.89, $T_m$ = 91.7°C.

(Example 2)

The same polymerization operation as in Example 1 was conducted, except that metallocene compound A and the cocatalyst were used in amounts of 0.10 $\mu$mol and 0.05 $\mu$mol, respectively, and that 1-hexene was used in an amount of 58 mL. Amount of the polymer yielded, 5.6 g.

Polymer indexes: density = 0.8887 g/cm$^3$, MFR = 2.9 g/10 min, Mw = 81,200, Mn = 42,700, Mw/Mn = 1.90, $T_m$ = 74.1°C.

(Example 3)

The same polymerization operation as in Example 1 was conducted, except that metallocene compound A and the cocatalyst were used in amounts of 0.20 $\mu$mol and 0.10 $\mu$mol, respectively, and that 1-hexene was used in an amount of 96 mL. Amount of the polymer yielded, 14.5 g.

Polymer indexes: density = 0.8699 g/cm$^3$, MFR = 45.8 g/10 min, Mw = 42,600, Mn = 21,300, Mw/Mn = 2.00, $T_m$ = 58.1°C.

(Comparative Example 1)

The same polymerization operation as in Example 1 was conducted, except that 0.30 μmol of metallocene compound B was used in place of the metallocene compound A, the cocatalyst was used in an amount of 0.15 μmol, and the polymerization period was 5 minutes. Amount of the polymer yielded, 19.1 g.

Polymer indexes: density = 0.8981 g/cm$^3$, MFR = 5.3 g/10 min, Mw = 84,400, Mn = 19,200, Mw/Mn = 4.40, $T_m$ = 77.8°C.

(Comparative Example 2)

The same polymerization operation as in Example 1 was conducted, except that 0.48 μmol of metallocene compound B was used in place of the metallocene compound A, the cocatalyst was used in an amount of 0.24 μmol, 1-hexene was used in an amount of 58 mL, and the polymerization period was 5 minutes. Amount of the polymer yielded, 13.6 g.

Polymer indexes: density = 0.8764 g/cm$^3$, MFR = 51 g/10 min, Mw = 41,800, Mn = 10,300, Mw/Mn = 4.04, $T_m$ = 67.0°C, 1-hexene content = 12.3 mol%.

(Comparative Example 3)

The same polymerization operation as in Example 1 was conducted, except that 0.80 μmol of metallocene compound C was used in place of the metallocene compound A, the cocatalyst was used in an amount of 0.40 μmol, and the polymerization period was 12 minutes. Amount of the polymer yielded, 15.1 g.

Polymer indexes: MFR = 3,600 g/10 min, Mw = 8,200, Mn = 3,600, Mw/Mn = 2.25, $T_m$ = 75.7°C.

(Comparative Example 4)

The same polymerization operation as in Example 1 was conducted, except that 0.70 μmol of metallocene compound C was used in place of the metallocene compound A, the cocatalyst was used in an amount of 0.35 μmol, 1-hexene was used in an amount of 58 mL, and the polymerization period was 18 minutes. Amount of the polymer yielded, 6.0 g.

Polymer indexes: Mw = 6,800, Mn = 3,100, Mw/Mn = 2.17, $T_m$ = 62.0°C.

(Comparative Example 5)

The same polymerization operation as in Example 1 was conducted, except that 0.10 μmol of metallocene compound D was used in place of the metallocene compound A, the cocatalyst was used in an amount of 0.05 μmol, 1-hexene was used in an amount of 58 mL, and the polymerization period was 5 minutes. Amount of the polymer yielded, 6.0 g.

Polymer indexes: density = 0.9053 g/cm$^3$, MFR = 0.47 g/10 min, Mw = 131,900, Mn = 32,500, Mw/Mn = 4.06, $T_m$ = 88.3°C.

(Comparative Example 6)

The same polymerization operation as in Example 1 was conducted, except that 0.20 μmol of metallocene compound E was used in place of the metallocene compound A, the cocatalyst was used in an amount of 0.10 μmol, 1-hexene was used in an amount of 58 mL, and the polymerization period was 12 minutes. Amount of the polymer yielded, 6.8 g.

Polymer indexes: density = 0.9073 g/cm$^3$, MFR = 0.35 g/10 min, Mw = 144,100, Mn = 12,800, Mw/Mn = 11.29, $T_m$ = 95.8°C.

(Comparative Example 7)

The same polymerization operation as in Example 1 was conducted, except that 0.10 μmol of metallocene

compound F was used in place of the metallocene compound A, the cocatalyst was used in an amount of 0.05 μmol, 1-hexene was used in an amount of 58 mL, and the polymerization period was 5 minutes. Amount of the polymer yielded, 7.0 g.

Polymer indexes: density = 0.8962 g/cm$^3$, MFR = 0.51 g/10 min, Mw = 120,900, Mn = 63,600, Mw/Mn = 1.90, $T_m$ = 83.7°C.

(Example 4)

The same polymerization operation as in Example 1 was conducted, except that metallocene compound A and the cocatalyst were used in amounts of 0.20 μmol and 0.10 μmol, respectively, 1-hexene was used in an amount of 62 mL, and the polymerization temperature and the polymerization period were changed to 125°C and 6 minutes, respectively. Amount of the polymer yielded, 3.5 g.

Polymer indexes: density = 0.8841 g/cm$^3$, MFR = 0.11 g/10 min, Mw = 203,800, Mn = 100,900, Mw/Mn = 2.02, $T_m$ = 65.7°C.

(Comparative Example 8)

The same polymerization operation as in Example 1 was conducted, except that metallocene compound A and the cocatalyst were used in amounts of 0.20 μmol and 0.10 μmol, respectively, 1-hexene was used in an amount of 66 mL, and the polymerization temperature and the polymerization period were changed to 100°C and 6 minutes, respectively. Amount of the polymer yielded, 5.0 g.

Polymer indexes: density = 0.8803 g/cm$^3$, MFR = 0.01 g/10 min, Mw = 373,300, Mn = 186,700, Mw/Mn = 2.00, $T_m$ = 63.0°C.

(Comparative Example 9)

The same polymerization operation as in Example 1 was conducted, except that 0.10 μmol of metallocene compound B was used in place of the metallocene compound A, the cocatalyst was used in an amount of 0.05 μmol, 1-hexene was used in an amount of 62 mL, and the polymerization temperature and the polymerization period were changed to 125°C and 4 minutes, respectively. Amount of the polymer yielded, 10.9 g.

Polymer indexes: density = 0.8750 g/cm$^3$, MFR = 0.44 g/10 min, Mw = 147,200, Mn = 68,100, Mw/Mn = 2.16, $T_m$ = 58.6°C.

(Comparative Example 10)

The same polymerization operation as in Example 1 was conducted, except that 0.20 μmol of metallocene compound B was used in place of the metallocene compound A, the cocatalyst was used in an amount of 0.10 μmol, 1-hexene was used in an amount of 66 mL, and the polymerization temperature and the polymerization period were changed to 100°C and 13 minutes, respectively. Amount of the polymer yielded, 6.0 g.

Polymer indexes: density = 0.8740 g/cm$^3$, MFR (no flow), Mw = 452,400, Mn = 233,200, Mw/Mn = 1.94, $T_m$ = 53.0°C.

The performances of Examples 1 to 3 and Comparative Examples 1 to 7 are summarized in Table 1, and the performances of Examples 2 and 4 and Comparative Examples 2 and 8 to 10 are summarized in Table 2. A relationship between molecular weight (Mn) and density in Examples 1 to 3 and Comparative Examples 1 and 2 is shown in Fig. 1.

[Table 1]

Table 1. Comparison in performance among metallocene compounds at same polymerization temperature (150°C)

| Example | Metallocene compound | Hexene [mL] | $M_n$ | $M_w/M_n$ | MFR [g/10 min] | Density [g/cm$^3$] | $T_m$ [°C] |
|---|---|---|---|---|---|---|---|
| Example 1 | A | 33 | 54,300 | 1.89 | 1.10 | 0.9020 | 91.7 |

(continued)

| Example | Metallocene compound | Hexene [mL] | $M_n$ | $M_w/M_n$ | MFR [g/10 min] | Density [g/cm$^3$] | $T_m$ [°C] |
|---|---|---|---|---|---|---|---|
| Example 2 | A | 58 | 42,700 | 1.90 | 2.9 | 0.8887 | 74.1 |
| Example 3 | A | 96 | 21,300 | 2.00 | 45.8 | 0.8699 | 58.1 |
| Comparative Example 1 | B | 33 | 19,200 | 4.40 | 5.3 | 0.8981 | 77.8 |
| Comparative Example 2 | B | 58 | 10,300 | 4.04 | 51 | 0.8764 | 67.0 |
| Comparative Example 3 | C | 33 | 3,600 | 2.25 | 3600 | * | 75.7 |
| Comparative Example 4 | C | 58 | 3,100 | 2.17 | - | * | 62 |
| Comparative Example 5 | D | 58 | 32,500 | 4.06 | 0.47 | 0.9053 | 88.3 |
| Comparative Example 6 | E | 58 | 12,800 | 11.29 | 0.35 | 0.9073 | 95.8 |
| Comparative Example 7 | F | 58 | 63,600 | 1.90 | 0.51 | 0.8962 | 83.7 |

* Unable to be measured due to low molecular weight.
-: Not measured.

[Table 2]

Table 2. Comparison in performance among metallocene compounds at different polymerization temperatures and different 1-hexane concentrations

| Example | Metallocene compound | Hexene [mL] | Polymerization temperature [°C] | $M_n$ | $M_w/M_n$ | MFR [g/10 min] | Density [g/cm$^3$] | $T_m$ [°C] |
|---|---|---|---|---|---|---|---|---|
| Example 2 | A | 58 | 150 | 42,700 | 1.90 | 2.9 | 0.8887 | 74.1 |
| Comparative Example 2 | B | 58 | 150 | 10,300 | 4.04 | 51 | 0.8764 | 67.0 |
| Example 4 | A | 62 | 125 | 100,900 | 2.02 | 0.11 | 0.8841 | 65.7 |
| Comparative Example 9 | B | 62 | 125 | 68,100 | 2.16 | 0.44 | 0.8750 | 58.6 |
| Comparative Example 8 | A | 66 | 100 | 186,700 | 2.00 | 0.01 | 0.8803 | 63.0 |
| Comparative Example 10 | B | 66 | 100 | 233,200 | 1.94 | No Flow | 0.8740 | 53.0 |

[3] Continuous High-pressure Ionic Polymerization: Ethylene/propylene/1-hexene Copolymerization

The ethylene/propylene/1-hexene copolymerization reaction shown in Table 3 was conducted in the following manner. In a 5.0-L stainless-steel autoclave reactor (equipped with a stirrer) which had been sufficiently dried and undergone nitrogen displacement, polymerization was continuously conducted at a polymerization pressure of about 80 MPa and a temperature in the range of 200-250°C. Ethylene, propylene, and hexene were continuously fed to the polymerization system so as to result in a given monomer ratio, and the polymerization pressure was controlled with a

pressure-regulating valve. Furthermore, a heptane solution of tri(n-octyl)aluminum (TNOA) which had been prepared so as to have a concentration of 30 mg/L was continuously supplied as a scavenger. The metallocene compound and the cocatalyst $[Me_2N(H)C_6H_5][B(C_6F_5)_4]$ were separately prepared as toluene solutions (50 mg/L and 120 mg/L, respectively) and were continuously supplied to the polymerization system while being mixed within the pipeline. The feed rates of the metallocene compound and cocatalyst were regulated so that the polymerization system retained a given temperature. The polymerization was carried out using no solvent except the one which came into as the solvent of the catalyst and cocatalyst solutions and of the scavenger solution. The residence time was regulated to 200-220 seconds.

Under Examples I and II and Comparative Examples I and II in Table 3 are shown: polymerization conditions used in each Example, such as the feed rates of the metallocene compound (M), cocatalyst (B), and organo-Al, B/M molar ratio and Al/M molar ratio regarding the supplied catalyst components, feed rate of each monomer, molar ratio of the fed monomers, and polymerization temperature; and production rate, catalytic activity, and details of the polymer obtained, i.e., density, molecular weight and molecular weight distribution determined by GPC, MFR, and melting point determined by DSC.

[4] Continuous High-pressure Ionic Polymerization: Ethylene/1-hexene Copolymerization

The same polymerization operation as in the ethylene/propylene/1-hexene copolymerization described under [3] above was conducted, except that ethylene and hexene were used as monomers, the polymerization temperature was 240°C, either a heptane solution of tri(n-octyl)aluminum (TNOA) or a heptane solution of tri(n-hexyl)aluminum (TNHA) each prepared so as to have a concentration of 30 g/L was used as a scavenger, the metallocene compound and the cocatalyst $[Me_2N(H)C_6H_5][B(C_6F_5)_4]$ were prepared so as to have concentrations of 22 mg/L and 40 mg/L, respectively, and the residence time was regulated to about 190 seconds. The polymerization conditions and details of the results of the polymerization are shown under Examples III and IV in Table 3.

[Table 3]

Table 3. Results of high-pressure ionic polymerization

| Example | Example I | Example II | Comparative Example I | Comparative Example II | Example III | Example IV |
|---|---|---|---|---|---|---|
| Metallocene compound | A | A | B | B | A | A |
| Kind of organo-Al | TNOA | TNOA | TNOA | TNOA | TNOA | TNHA |
| Feed rate of complex [mg/h] | 39 | 38 | 54 | 29 | 23 | 16 |
| Feed rate of cocatalyst [mg/h] | 87 | 93 | 82 | 82 | 43 | 43 |
| Feed rate of organo-Al [g/h] | 4.4 | 5.8 | 4.9 | 4.9 | 4.9 | 5.9 |
| B/M [mol/mol] | 1.8 | 2.0 | 1.3 | 2.4 | 1.5 | 2.2 |
| Al/M [mol/mol] | 706 | 931 | 820 | 820 | 786 | 947 |
| Feed rate of ethylene [kg/h] | 22.0 | 22.0 | 22.1 | 22.1 | 20.9 | 20.6 |
| Feed rate of propylene [kg/h] | 6.7 | 6.7 | 6.7 | 6.7 | 0.0 | 0.0 |
| Feed rate of hexane [kg/h] | 13.5 | 13.5 | 13.5 | 13.5 | 26.4 | 26.5 |
| Molar ratio of C2/C3/C6 fed | 71/14.5/14.5 | 71/14.5/14.5 | 71/14.5/14.5 | 71/14.5/14.5 | 70/0/30 | 70/0/30 |
| Polymerization temperature [°C] | 240 | 210 | 240 | 210 | 240 | 240 |
| Production rate [kg/h] | 5.2 | 5.2 | 6.4 | 6.4 | 7.1 | 8.4 |

(continued)

| Example | Example I | Example II | Comparative Example I | Comparative Example II | Example III | Example IV |
|---|---|---|---|---|---|---|
| Catalytic activity [kg-PE/g-complex] | 134 | 282 | 119 | 222 | 311 | 540 |
| $M_n$ | 19,000 | 28,800 | 4,800 | 8,300 | 21,000 | 19,000 |
| $M_w/M_n$ | 2.82 | 2.91 | 4.97 | 4.59 | 2.49 | 2.52 |
| MFR [g/10 min] | 22 | 3.9 | 630 | 103 | 24 | 34 |
| Density [g/cm$^3$] | 0.8985 | 0.8919 | 0.8944 | 0.8834 | 0.8933 | 0.8910 |
| $T_m$[°C] | 88 | 75 | 78(104,119)* | 69(93)* | 85 | 83 |
| * Numerals within the parentheses indicate minor peaks. | | | | | | |

[Discussion on Results of Comparisons between Examples and Comparative Examples]

As apparent from Table 1, it can be seen from a comparison between the results of Example 2 and those of Comparative Examples 2 and 4 to 7, in which the same polymerization temperature and the same monomer ratio were used, that the production process of the invention yields ethylene/α-olefin copolymers which have an excellent balance between low density and high molecular weight while enabling the catalyst to show excellent α-olefin copolymerization properties. Comparative Examples 5 to 7 are insufficient because the density is high, while Comparative Examples 2 and 4 are sufficiently low in density but are low in molecular weight. Furthermore, as apparent from Table 1 and Fig. 1, which shows the polymerization results of Examples 1 to 3 and Comparative Examples 1 and 2, in which monomer ratios different from that in those polymerization conditions were used, it can be seen that the superiority is obtained over a wide density range.

As apparent from Table 2, a comparison in polymerization results between Example 2 and Comparative Example 2, in which different metallocene compounds and the same polymerization temperature were used, and a comparison in polymerization results between Example 4 and Comparative Example 9, in which different metallocene compounds and the same polymerization temperature were used, show that the production process of the invention attains an excellent balance between density and molecular weight at polymerization temperatures of at least 125°C and higher. Meanwhile, it can be seen from the results of Comparative Examples 8 and 10 that at polymerization temperatures of 100°C and lower, the metallocene compounds used in the invention do not bring about an improvement in molecular weight and cannot produce the effects.

In addition, as apparent from a comparison between Examples I and II and Comparative Examples I and II in Table 3, the effects are produced also in the high-pressure ionic polymerization conducted under high-temperature high-pressure conditions. It is apparent that the effect on, in particular, molecular weight is remarkable at higher polymerization temperatures. Furthermore, as apparent from Examples III and IV, the effects are produced even when the feed ratio of hexene, which is sterically bulky, is increased or even when TNHA, which is a sterically small organoaluminum, is used.

This application is based on a Japanese patent application filed on March 5, 2013 (Application No. 2013-042507), the contents thereof being incorporated herein by reference.

Industrial Applicability

As apparent from the explanations given above, in cases when the production process of the invention, in which use is made of an olefin polymerization catalyst that shows excellent α-olefin copolymerization properties at industrially advantageous polymerization temperatures, is used in ethylene/α-olefin copolymerization, a copolymer having a low density is yielded even with a low α-olefin concentration, as compared with the production processes in which conventional metallocene compounds are used. This process can produce an ethylene/α-olefin copolymer having an excellent balance between density and molecular weight.

Consequently, the process of the invention for producing an ethylene/α-olefin copolymer has an exceedingly high industrial value.

## Claims

1. A process for producing an olefin polymer, the process comprising copolymerizing ethylene with a α-olefin at a polymerization temperature of 110°C or higher using a catalyst for olefin polymerization which comprises components (A) and (B) and optionally comprises a component (C):

   Component (A): a metallocene compound represented by the following general formula [I],
   Component (B): a compound which reacts with component (A) to form an ion pair, or an ion-exchanging layered silicate, and
   Component (C): an organoaluminum compound,

   [Chem. 1]

   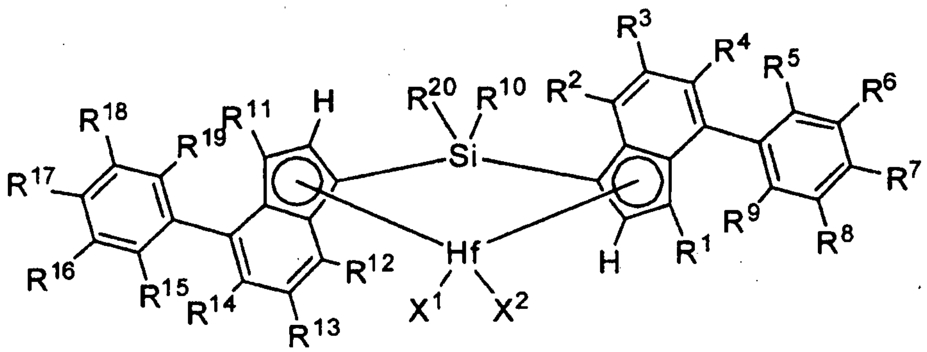

   ・・・[ I ]

   [In formula [I], $R^1$ to $R^9$ and $R^{11}$ to $R^{19}$ are the same or different and each represents a hydrogen atom, a halogen atom, an alkyl group having 1-10 carbon atoms, a halogenoalkyl group having 1-10 carbon atoms, an aryl group having 6-20 carbon atoms, an alkoxy group having 1-10 carbon atoms, a silyl group having a hydrocarbon group having 1-6 carbon atoms, an alkyl group having 1-20 carbon atoms and substituted with a silyl group having a hydrocarbon group having 1-6 carbon atoms, an $-NR^{21}_2$ group, an $-SR^{21}$ group, an $-OSiR^{21}_3$ group, or a $-PR^{21}_2$ group (wherein the $R^{21}$'s are the same or different and each represents a halogen atom, an alkyl group having 1-10 carbon atoms, or an aryl group having 6-20 carbon atoms), and neighboring groups of $R^1$ to $R^9$ and $R^{11}$ to $R^{19}$ may form one or more aromatic rings or aliphatic rings along with the atom which links the neighboring groups, or $R^4$ and either $R^5$ or $R^9$ may form one aromatic ring or aliphatic ring along with the atom which links these groups and $R^{14}$ and either $R^{15}$ or $R^{19}$ may form one aromatic ring or aliphatic ring along with the atom which links these groups;
   $R^{10}$ and $R^{20}$ are the same or different and each represents a hydrogen atom, a halogen atom, an alkyl group having 1-10 carbon atoms, a fluoroalkyl group having 1-10 carbon atoms, an alkoxy group having 1-10 carbon atoms, an aryl group having 6-20 carbon atoms, an fluoroaryl group having 6-10 carbon atoms, an aryloxy group having 6-10 carbon atoms, an alkenyl group having 2-10 carbon atoms, an arylalkyl group having 7-40 carbon atoms, an alkylaryl group having 7-40 carbon atoms, or an arylalkenyl group having 8-40 carbon atoms, with the proviso that $R^{10}$ and $R^{20}$ are not simultaneously a hydrogen atom and that $R^{10}$ and $R^{20}$ may form one or more rings along with the atom which links these groups; and
   $X^1$ and $X^2$ are the same or different and are selected from the group consisting of a hydrogen atom, an alkyl group having 1-10 carbon atoms, an alkoxy group having 1-10 carbon atoms, an aryl group having 6-20 carbon atoms, an aryloxy group having 6-10 carbon atoms, an alkenyl group having 2-10 carbon atoms, an arylalkyl group having 7-40 carbon atoms, an alkylaryl group having 7-40 carbon atoms, an arylalkenyl group having 8-40 carbon atoms, an alkyl group having 1-20 carbon atoms and substituted with a silyl group having a hydrocarbon group having 1-6 carbon atoms, a substituted amino group having 1-10 carbon atoms, an OH group, a halogen atom, and a neutral ligand capable of coordinating with lone-pair electrons, and $X^1$ and $X^2$ may form one ring along with the atom which links these groups.]

2. The process for producing an olefin polymer according to claim 1, wherein the polymerization temperature is 125°C or higher.

3. The process for producing an olefin polymer according to claim 1 or claim 2, wherein the polymerization temperature is 180°C or higher.

4. The process for producing an olefin polymer according to any one of claim 1 to claim 3, wherein component (B) is a boron compound.

5. The process for producing an olefin polymer according to any one of claim 1 to claim 4, wherein in general formula (I), $R^1$ to $R^4$ and $R^{11}$ to $R^{14}$ are the same or different and each represents a hydrogen atom or an alkyl group having 1-10 carbon atoms, and $R^5$ to $R^9$ and $R^{15}$ to $R^{19}$ are the same or different and each represents a hydrogen atom, an alkyl group having 1-10 carbon atoms, or an aryl group having 6-10 carbon atoms.

6. The process for producing an olefin polymer according to any one of claim 1 to claim 5, wherein a pressure at the polymerization is 2 MPa or higher.

7. The process for producing an olefin polymer according to any one of claim 1 to claim 6, wherein a pressure at the polymerization is 55 MPa or higher and 125 MPa or lower.

**Patentansprüche**

1. Verfahren zur Herstellung eines Olefinpolymers, das Verfahren umfassend Copolymerisieren von Ethylen mit einem $\alpha$-Olefin bei einer Polymerisationstemperatur von 110°C oder höher unter Verwendung eines Katalysators für Olefinpolymerisation, der die Bestandteile (A) und (B) umfasst und gegebenenfalls einen Bestandteil (C) umfasst:

Bestandteil (A): eine Metallocenverbindung, dargestellt durch die folgende allgemeine Formel [I],
Bestandteil (B): eine Verbindung, die mit Bestandteil A unter Bildung eines Ionenpaares reagiert, oder ein ionentauschendes Schichtsilikat und
Bestandteil (C): eine aluminiumorganische Verbindung,

[Chem. 1]

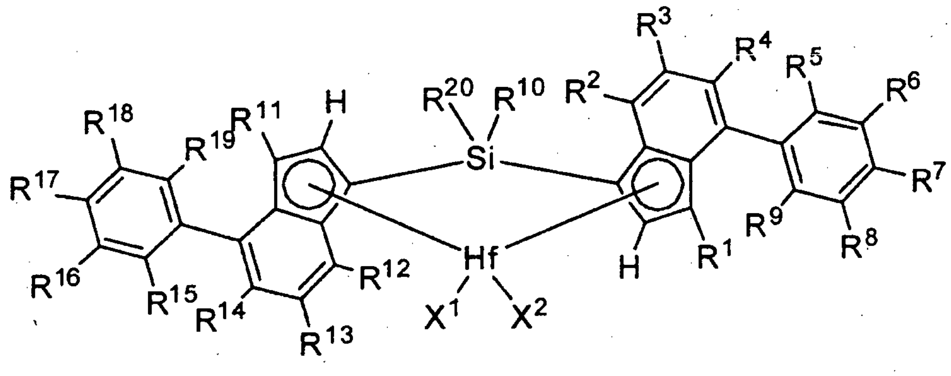

• • • [ I ]

[In Formel [I] sind $R^1$ bis $R^9$ und $R^{11}$ bis $R^{19}$ gleich oder verschieden und stellen jeweils ein Wasserstoffatom, ein Halogenatom, eine Alkylgruppe mit 1-10 Kohlenstoffatomen, eine Halogenalkylgruppe mit 1-10 Kohlenstoffatomen, eine Arylgruppe mit 6-20 Kohlenstoffatomen, eine Alkoxygruppe mit 1-10 Kohlenstoffatomen, eine Silylgruppe mit einer Kohlenwasserstoffgruppe mit 1-6 Kohlenstoffatomen, eine Alkylgruppe mit 1-20 Kohlenstoffatomen und substituiert mit einer Silylgruppe mit einer Kohlenwasserstoffgruppe mit 1-6 Kohlenstoffatomen, eine $-NR^{21}_2$-Gruppe, eine $-SR^{21}$-Gruppe, eine $-OSiR^{21}_3$-Gruppe oder eine $-PR^{21}_2$-Gruppe (wobei die $R^{21}$ gleich oder verschieden sein können und jeweils ein Halogenatom, eine Alkylgruppe mit 1-10 Kohlenstoffatomen oder eine Arylgruppe mit 6-20 Kohlenstoffatomen darstellen), dar, und benachbarte Gruppen von $R^1$ bis $R^9$ und $R^{11}$ bis $R^{19}$ können einen oder mehrere aromatische Ringe oder aliphatische Ringe zusammen mit dem die benachbarten Gruppen verbindenden Atom bilden, oder $R^4$ und entweder $R^5$ oder $R^9$ können einen aromatischen Ring oder aliphatischen Ring zusammen mit dem diese Gruppen verbindenden Atom bilden und $R^{14}$ und entweder $R^{15}$ oder $R^{19}$ können einen aromatischen Ring oder aliphatischen Ring zusammen mit dem diese Gruppen verbindenden Atom bilden;
$R^{10}$ und $R^{20}$ sind gleich oder verschieden und stellen jeweils ein Wasserstoffatom, ein Halogenatom, eine Alkylgruppe mit 1-10 Kohlenstoffatomen, eine Fluoralkylgruppe mit 1-10 Kohlenstoffatomen, eine Alkoxygruppe mit 1-10 Kohlenstoffatomen, eine Arylgruppe mit 6-20 Kohlenstoffatomen, eine Fluorarylgruppe mit

6-10 Kohlenstoffatomen, eine Aryloxygruppe mit 6-10 Kohlenstoffatomen, eine Alkenylgruppe mit 2-10 Kohlenstoffatomen, eine Arylalkylgruppe mit 7-40 Kohlenstoffatomen, eine Alkylarylgruppe mit 7-40 Kohlenstoffatomen oder eine Arylalkenylgruppe mit 8-40 Kohlenstoffatomen dar, mit der Maßgabe, dass $R^{10}$ und $R^{20}$ nicht gleichzeitig ein Wasserstoffatom darstellen und dass $R^{10}$ und $R^{20}$ einen oder mehrere Ringe mit dem diese Gruppen verbindenden Atom bilden können;
und
$X^1$ und $X^2$ sind gleich oder verschieden und sind ausgewählt aus der Gruppe, bestehend aus einem Wasserstoffatom, einer Alkylgruppe mit 1-10 Kohlenstoffatomen, einer Alkoxygruppe mit 1-10 Kohlenstoffatomen, einer Arylgruppe mit 6-20 Kohlenstoffatomen, einer Aryloxygruppe mit 6-10 Kohlenstoffatomen, einer Alkenylgruppe mit 2-10 Kohlenstoffatomen, einer Arylalkylgruppe mit 7-40 Kohlenstoffatomen, einer Alkylarylgruppe mit 7-40 Kohlenstoffatomen, einer Arylalkenylgruppe mit 8-40 Kohlenstoffatomen, einer Alkylgruppe mit 1-20 Kohlenstoffatomen und substituiert mit einer Silylgruppe mit einer Kohlenwasserstoffgruppe mit 1-6 Kohlenstoffatomen, einer substituierten Aminogruppe mit 1-10 Kohlenstoffatomen, einer OH-Gruppe, einem Halogenatom und einem neutralen Liganden, der an freie Elektronenpaare koordinieren kann, und $X^1$ und $X^2$ können einen Ring mit dem diese Gruppen verbindenden Atom bilden.]

**2.** Verfahren zur Herstellung eines Olefinpolymers nach Anspruch 1, wobei die Polymerisationstemperatur 125°C oder höher beträgt.

**3.** Verfahren zur Herstellung eines Olefinpolymers nach Anspruch 1 oder Anspruch 2, wobei die Polymerisationstemperatur 180°C oder höher beträgt.

**4.** Verfahren zur Herstellung eines Olefinpolymers nach einem der Ansprüche 1 bis 3, wobei der Bestandteil (B) eine Borverbindung ist.

**5.** Verfahren zur Herstellung eines Olefinpolymers nach einem der Ansprüche 1 bis 4, wobei in der allgemeinen Formel (I) $R^1$ bis $R^4$ und $R^{11}$ bis $R^{14}$ gleich oder verschieden sind und jeweils ein Wasserstoffatom oder eine Alkylgruppe mit 1-10 Kohlenstoffatomen darstellen und $R^5$ bis $R^9$ und $R^{15}$ bis $R^{19}$ gleich oder verschieden sind und jeweils ein Wasserstoffatom, eine Alkylgruppe mit 1-10 Kohlenstoffatomen oder eine Arylgruppe mit 6-10 Kohlenstoffatomen darstellen.

**6.** Verfahren zur Herstellung eines Olefinpolymers nach einem der Ansprüche 1 bis 5, wobei ein Druck bei der Polymerisation 2 MPa oder höher beträgt.

**7.** Verfahren zur Herstellung eines Olefinpolymers nach einem der Ansprüche 1 bis 6, wobei ein Druck bei der Polymerisation 55 MPa oder höher und 125 MPa oder geringer beträgt.

## Revendications

**1.** Procédé de production d'un polymère oléfinique, le procédé comprenant la copolymérisation d'éthylène avec une $\alpha$-oléfine à une température de polymérisation de 110°C ou plus à l'aide d'un catalyseur de polymérisation oléfinique qui comprend les composants (A) et (B) et optionnellement le composant (C) :

composant (A) : composé métallocène représenté par la formule générale [I] suivante,
composant (B) : composé qui réagit avec le composé (A) pour former une paire d'ions, ou silicate lamellaire échangeur d'ions, et
composant (C) : composé organoaluminium

[Chem. 1]

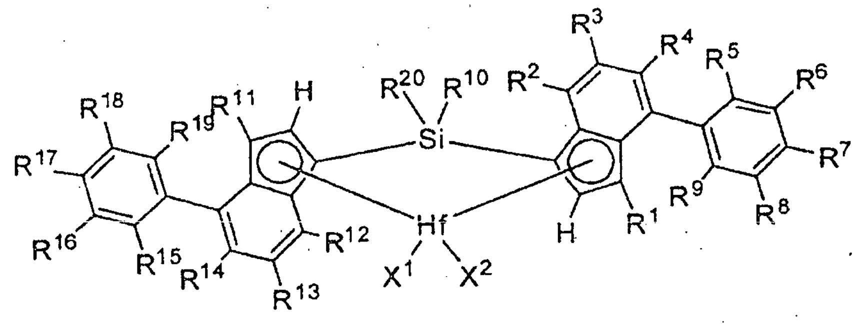

[I]

[Dans la formule [I], $R^1$ à $R^9$ et $R^{11}$ à $R^{19}$ sont identiques ou différents et chacun représente un atome d'hydrogène, un atome d'halogène, un groupe alkyle ayant 1-10 atomes de carbone, un groupe halogénure d'alkyle ayant 1-10 atomes de carbone, un groupe aryle ayant 6-20 atomes de carbone, un groupe alcoxy ayant 1-10 atomes de carbone, un groupe silyle ayant un groupe hydrocarboné ayant 1-6 atomes de carbone, un groupe alkyle ayant 1-20 atomes de carbone et substitué par un groupe silyle ayant un groupe hydrocarboné ayant 1-6 atomes de carbone, un groupe $-NR^{21}_2$, un groupe $-SR^{21}$, un groupe $-OSiR^{21}_3$, un groupe $-PR^{21}_2$ (où les $R^{21}$ sont identiques ou différents et chacun représente un atome d'halogène, un groupe alkyle ayant 1-10 atomes de carbone, ou un groupe aryle ayant 6-20 atomes de carbone), et les groupes voisins de $R^1$ à $R^9$ et de $R^{11}$ à $R^{19}$ peuvent former un ou plusieurs cycles aromatiques ou cycles aliphatiques avec l'atome qui lie ces groupes voisins, ou $R^4$ et soit $R^5$ ou $R^9$ peuvent former un cycle aromatique ou un cycle aliphatique avec l'atome qui lie ces groupes et $R^{14}$ et soit $R^{15}$ ou $R^{19}$ peuvent former un cycle aromatique ou un cycle aliphatique avec l'atome qui lie ces groupes ;
$R^{10}$ et $R^{20}$ sont identiques ou différents et représentent chacun un atome d'hydrogène, un atome d'halogène, un groupe alkyle ayant 1-10 atomes de carbone, un groupe fluoroalkyle ayant 1-10 atomes de carbone, un groupe alcoxy ayant 1-10 atomes de carbone, un groupe aryle ayant 6-20 atomes de carbone, un groupe fluoroaryle ayant 6-10 atomes de carbone, un groupe aryloxy ayant 6-10 atomes de carbone, un groupe alcényle ayant 2-10 atomes de carbone, un groupe arylalkyle ayant 7-40 atomes de carbone, un groupe alkylaryle ayant 7-40 atomes de carbone, ou un groupe arylalcényle ayant 8-40 atomes de carbone, avec la condition que $R^{10}$ et $R^{20}$ ne sont pas simultanément un atome d'hydrogène et que $R^{10}$ et $R^{20}$ peuvent former un ou plusieurs cycles avec l'atome qui lie ces groupes ; et
$X^1$ et $X^2$ sont identiques ou différents et sont choisis parmi le groupe consistant en un atome d'hydrogène, un groupe alkyle ayant 1-10 atomes de carbone, un groupe alcoxy ayant 1-10 atomes de carbone, un groupe aryle ayant 6-20 atomes de carbone, un groupe aryloxy ayant 6-10 atomes de carbone, un groupe alcényle ayant 2-10 atomes de carbone, un groupe arylalkyle ayant 7-40 atomes de carbone, un groupe alkylaryle ayant 7-40 atomes de carbone, un groupe arylalcényle ayant 8-40 atomes de carbone, un groupe alkyle ayant 1-20 atomes de carbone et substitué par un groupe silyle ayant un groupe hydrocarboné ayant 1-6 atomes de carbone, un groupe amino substitué ayant 1-10 atomes de carbone, un groupe OH, un atome d'halogène, et un ligand neutre capable de coordination avec des une paire d'électrons libres, et $X^1$ et $X^2$ peuvent former un cycle avec l'atome qui lie ces groupes.]

**2.** Procédé de production d'un polymère oléfinique selon la revendication 1, où la température de polymérisation se situe à 125°C ou plus.

**3.** Procédé de production d'un polymère oléfinique selon la revendication 1 ou 2, où la température de polymérisation se situe à 180°C ou plus.

**4.** Procédé de production d'un polymère oléfinique selon l'une quelconque des revendications 1 à 3, où le composant (B) est un composé du bore.

**5.** Procédé de production d'un polymère oléfinique selon l'une quelconque des revendications 1 à 4, où dans la formule générale (I), $R^1$ à $R^4$ et $R^{11}$ à $R^{14}$ sont identiques ou différents et représentent chacun un atome d'hydrogène ou un groupe alkyle ayant 1-10 atomes de carbone, et $R^5$ à $R^9$ et $R^{15}$ à $R^{19}$ sont identiques ou différents et représentent chacun un atome d'hydrogène, un groupe alkyle ayant 1-10 atomes de carbone, ou un groupe aryle ayant 6-10 atomes de carbone.

6. Procédé de production d'un polymère oléfinique selon l'une quelconque des revendications 1 à 5, où la pression de la polymérisation se situe à 2 MPa ou plus.

7. Procédé de production d'un polymère oléfinique selon l'une quelconque des revendications 1 à 6, où la pression de la polymérisation se situe à 55 MPa ou plus, et à 125 MPa ou moins.

[Fig. 1]

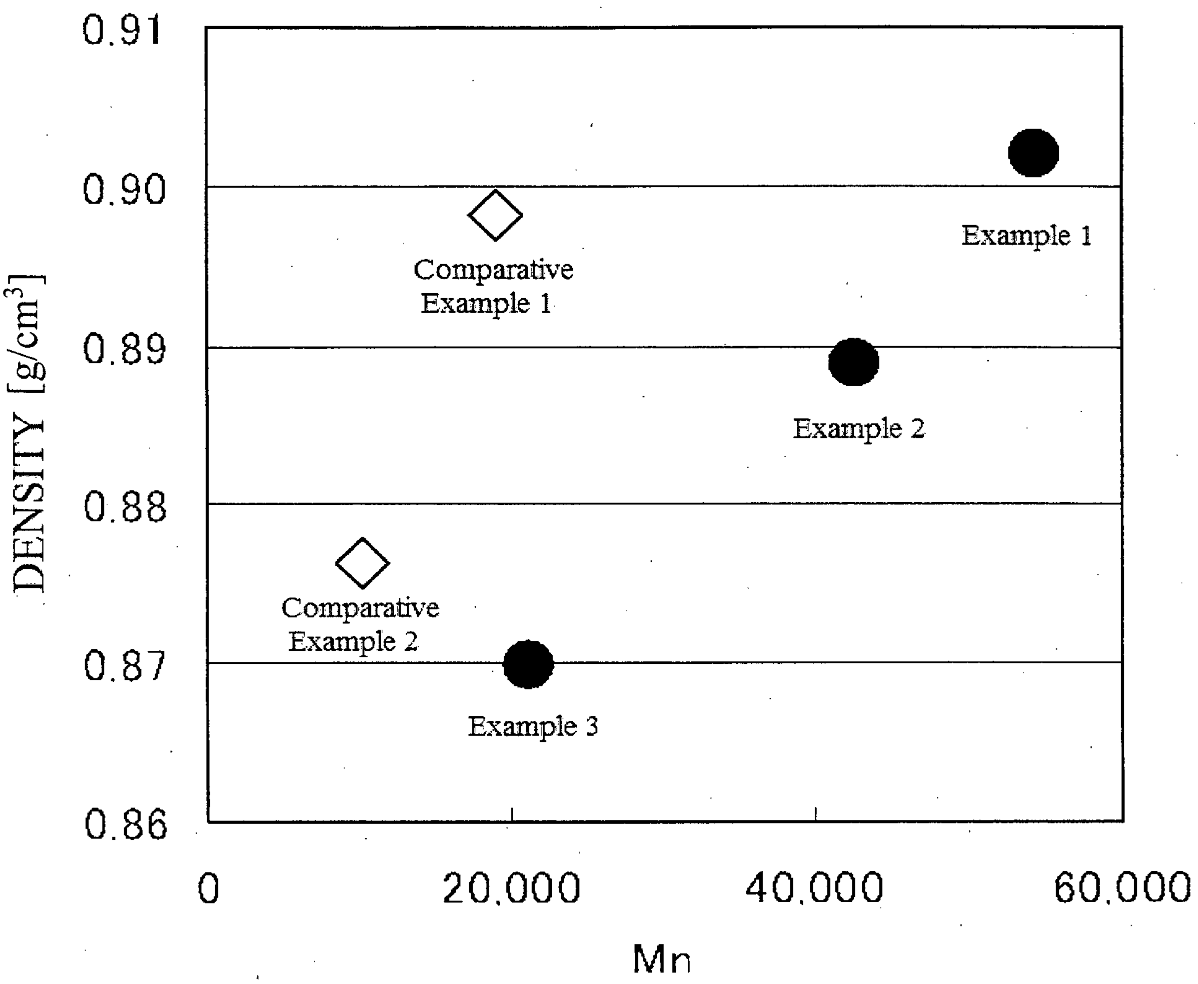
0.91
0.90
0.89
0.88
0.87
0.86
DENSITY [g/cm3]
0
20,000
40,000
60,000
Mn
Example 1
Comparative Example 1
Example 2
Comparative Example 2
Example 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4553985 B
- JP 2011500800 T
- JP 2012513463 T
- JP 2002194016 A
- JP 4901043 B
- JP 4416507 B
- JP 4288658 B
- JP 2004352707 A
- JP 2001253913 A
- JP 3389265 B
- JP 3482412 B
- JP 2013042507 A


### Non-patent literature cited in the description


- *Macromol. Chem. Phys.,* 1996, vol. 197, 3091-3097
- *Organometallics,* 1994, vol. 13, 954-963
- *Macromol. Chem. Phys.,* 2005, vol. 206, 1675-1683
- *Macromol. Chem. Phys.,* 2005, vol. 206, 1043-1056
- **HARUO SHIROZU.** Nendo Köbutsu-gaku. Asakura Publishing Co., Ltd, 1995